# EUROPEAN PATENT APPLICATION

(11) **EP 2 911 050 A2**
(43) Date of publication of application: **26.08.2015**
(21) Application number: 14200194.0
(22) Date of filing: 23.12.2014
(51) Int. Cl.: G06F 3/0487, G06F 3/0354, H04M 1/02, G06F 1/16

(54) **User terminal apparatus and control method thereof**

(30) Priority: 03.01.2014 KR 20140000551
(71) Applicant: Samsung Electronics Co., Ltd, Gyeonggi-do 443-742 (KR)
(72) Inventor: Yoo, Ha-yeon, Gyeonggi-do (KR); Lee, Young-ah, Seoul (KR); Lee, Kwan-min, Seoul (KR)
(74) Representative: Appleyard Lees

(57) **Abstract**

A user terminal apparatus (100) includes a user interface (120) that generates a sliding interaction status based on a sliding interaction of layered panels that can perform physical sliding, and a controller (140) that transmits signals corresponding to the sliding interaction status to an external device (200), in which the signals corresponding to the sliding interaction status are control signals corresponding to one or more functions based on context of the external device.

## Description

### CROSS-REFERENCE TO RELATED APPLICATION

This application claims priority from Korean Patent Application No. 10-2014-0000551, filed on January 3, 2014 in the Korean Intellectual Property Office, the disclosure of which is incorporated herein by reference in its entirety.

### BACKGROUND

### 1. Field

Apparatuses and methods consistent with exemplary embodiments relate to a user terminal apparatus and a control method thereof, and more specifically, to a slidable user terminal apparatus, and a control method thereof.

### 2. Description of Related Art

Strengthened by the development of the electronic technology, various types of display apparatuses are being developed. Specifically, display apparatuses, such as TVs, PCs, laptop computers, tablet PCs, mobile phones, or MP3 players, are produced at a high distribution rate, and exist in an increasing number of households.

Recently, efforts have been made to develop new display apparatuses to satisfy the demand for new and different functions.

Various user terminal apparatus have been developed to include a touch screen that can variously modify layouts various purposes.

However, there is a need for an intuitive user terminal apparatus that does not require a user to view the screen and input instructions for an intended operation.

### SUMMARY

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

According to the present invention there is provided an apparatus and method as set forth in the appended claims. Other features of the invention will be apparent from the dependent claims, and the description which follows.

According to an aspect of an exemplary embodiment, the user terminal apparatus includes a user interface configured to generate a sliding interaction status based on a sliding interaction of layered panels that can perform physical sliding, and a controller configured to transmit signals corresponding to the input sliding interaction status to an external device. Further, the signals corresponding to the sliding interaction status may be control signals corresponding to one or more functions based on a context of the external device.

Herein, the sliding interaction of layered panels may include at least one of a sliding interaction between two of the panels of the layered panels, a sliding interaction between one of the panels of the layered panels and the other panels of the layered panels.

Herein, the physical sliding may include at least one of a sliding of one of the panels of the layered panels relative to another of the panels of the layered panels, a translation of one of the panels of the layered panels in a direction parallel to a layering of the layered panels, a rotation of one of the panels of the layered panels about an axis orthogonal to a layering of the layered panels, a movement of one of the panels of the layered panels wherein the panel may be at a constant distance from the other panels of the layered panels. Further the physical sliding may include a panel of the layered panels being in physical contact with another layered panel of the layered panels.

Herein, the context of the external device may include at least one of a content type displayed on the external device, a function provided from and/or by the external device, and a display status of the external device.

Further, the sliding interaction status may include at least one of a sliding direction, a sliding degree, a sliding time, a sliding velocity, a sliding speed, and a sliding acceleration.

Herein, the sliding direction may include a direction of at least one of a sliding, and/or translation, and/or rotation, and/or movement of one of the panels of the layered panels relative to another of the panels of the layered panels and wherein the sliding direction may be in a direction parallel to a layering of the layered panels.

Herein, the sliding degree may include a degree and/or angle of at least one of a sliding direction and/or translation and/or rotation and/or movement of one of the panels of the layered panels relative to another of the panels of the layered panels and wherein the sliding direction may be in a direction parallel to a layering of the layered panels.

Herein, a sliding time may include at least one of a time of sliding of one of the panels of the layered panels relative to another of the panels of the layered panels.

Further, the signals corresponding to the sliding interaction status may be signals configured to provide, on a screen of the external device, sliding animation effects corresponding to a display status of the external device based on at least one of the sliding direction, the sliding degree, the sliding time and the sliding velocity.

Further, the signals corresponding to the sliding interaction status may be signals to provide on a screen of the external device, a preset type of user interface (UI) based on at least one of a sliding interaction direction and a direction opposite to the sliding interaction direction on the screen of the external device.

Further, the signals corresponding to the sliding interaction status may be signals to move a currently displayed UI on the screen of the external device toward/in the sliding interaction direction, and provide a new UI associated with the currently displayed UI from the direction opposite to the sliding interaction direction.

Further, the signals corresponding to the sliding interaction status may be signals to move the preset type of UI toward a direction corresponding to at least one of the sliding interaction direction and the direction opposite to the sliding interaction direction on the screen of the external device.

Further, the signals corresponding to the sliding interaction status may include at least one of signals to provide a preset type of UI, signals to convert UI pages, signals to move an object, signals to adjust a volume, signals to change a channel, signals to perform scrolling, and signals indicating degree of progress on a progress bar displayed on the external device.

Herein, the layered panels may include a first panel and a second panel arranged on the front face of the first panel so that the second panel can be slid toward at least one direction relative to the first panel, and the controller may generate signals corresponding to the sliding interaction status based on sliding direction of the second panel, or at least based on relative sliding between the panels.

Further, the user terminal apparatus may further include a guide configured to guide the second panel, relative to the first panel, to circularly slide along a circular arc to or between opposite ends of the circular arc.

Further, the controller may provide a wallpaper screen including at least one of a widget, an idle application and a customized content in response to the user terminal apparatus being in standby mode.

Further, the controller may display an initial screen including a preset item in response to a preset event occurring in the standby mode, and transmit signals to the external device to provide a screen corresponding to the selected preset item with signals to turn on the external device hen the preset item is selected.

Further, the user terminal apparatus may include a support protruded to hold the lower face of the user terminal apparatus toward at least one direction.

Further, the support may be implemented to include a near field communication tag storing a software module associated with a remote controlling function, to detach from the user terminal apparatus, and to be mounted on another user terminal apparatus to automatically activate the remote controlling function of the another user terminal apparatus.

Meanwhile, according to an aspect of an exemplary embodiment, a control method of the user terminal apparatus may include receiving a sliding interaction through layered panels that can perform physical sliding, generating a sliding interaction status based on the received sliding interaction, and transmitting signals corresponding to the generated sliding interaction status to an external device. The transmitted signals corresponding to the sliding interaction status may be control signals corresponding to one or more functions based on a context of the external device.

According to an aspect of an exemplary embodiment, a display apparatus may include a communicator configured to receive signals corresponding to a sliding interaction status from a user terminal comprising layered panels to perform physical sliding, and a controller configured to perform different one or more controlling functions corresponding to the received signals and a context of the display apparatus.

Herein, the context of the external device may include at least one of a content type displayed on the external device, functions provided from the external device, and a display status of the external device.

Further, the sliding interaction status may include at least one of sliding direction, sliding degree, sliding time, and sliding velocity.

Further, the signals corresponding to the sliding interaction status may be signals to provide sliding animation effects corresponding to a display status of the external device based on at least one of the sliding direction, the sliding degree, the sliding time and the sliding velocity.

Further, the signals corresponding to the sliding interaction direction may be signals to provide a preset type of UI screen, on the screen of the external device, based on at least one of a sliding interaction direction and a direction opposite to the sliding interaction direction.

Further, the signals corresponding to the sliding interaction direction may be signals to move a currently displayed UI on the screen of the external device toward the sliding interaction direction, and provide new UI associated with the currently displayed UI from direction opposite to the sliding interaction direction.

Further, the corresponding signals to the sliding interaction direction may be signals to provide a preset type of UI toward a direction corresponding to at least one of the sliding interaction direction and the direction opposite to the sliding interaction direction on the screen of the external device.

Further, the signals corresponding to the sliding interaction status may include at least one of signals to provide a preset type of UI, signals to convert UI pages, signals to move an object, signals to adjust the volume, signals to change the channel, signals to perform scrolling, and signals indicating a degree of progress on a progress bar displayed on the external device.

Meanwhile, according to an aspect of an exemplary embodiment, a display system including the user terminal apparatus and the display apparatus may be provided, in which the user terminal apparatus is configured to transmit signals corresponding to a sliding interaction status input through layered panels that can perform physical sliding to the display apparatus, and a display apparatus configured to receive the signals transmitted from the user terminal apparatus, perform different controlling functions corresponding to the received signals based on a context of the display apparatus.

Meanwhile, according to an aspect of an exemplary embodiment, the user terminal apparatus may include a panel configured to receive a sliding interaction input through layered panels that can perform physical sliding, and a controller configured to transmit signals corresponding to the input sliding interaction status to an external device. The panel may include a first panel, a second panel arranged on a front surface of the first panel so as to slide toward at least one direction relative to the first panel, and a guide configured to guide the sliding of the first panel and the second panel while overlapped with each other.

Herein, the guide may guide the second panel, relative to the first panel, to circularly slide along a circular arc to opposite ends of the circular.

Further, the guide may include a plurality of projections formed on the lower face of the second panel and a plurality of grooves formed so as to respectively correspond to the plurality of projections on the upper face of the first panel. Each one of the projections may be inserted into the grooves of the second panel so as to move within the grooves toward sliding direction of the second panel.

According to an aspect of an exemplary embodiment, an input device for controlling an electronic apparatus may include a front panel connected to a back panel so that the front panel is slidable with respect to the back panel, a relative position sensor configured to sense a position of the first panel relative to the back panel, and generate a relative position signal, and a controller configured to receive the relative position signal from the relative position sensor, and based on the received relative position signal, determine the relative position and generate an output signal based on the determined relative position signal.

The input device may further include a touchscreen on a front surface of the front panel configured to generate a UI and sense a touch gesture and generate a touch signal, the controller may be configured to receive the touch signal from the touchscreen and determine one or more gestures, and the output signal may be based on the determined one or more gestures.

The input device may further include an orientation sensor configured to sense an orientation of the input device and generate an orientation signal, and the controller may be configured to receive the orientation signal from the orientation sensor and determine the orientation and the output signal is based on the determined orientation.

The controller may generate one or more control signals based on the relative position signal, the touch signal and the orientation signal.

The input device may further include a communicator configured to receive the output signal from the controller and output communication signals based on the received output signal.

The controller may be configured to control the communicator to pair with the electronic apparatus.

According to another aspect of an exemplary embodiment, a method of controlling an external device with a handheld device may include sensing a relative position of a front panel of the handheld device connected to a back panel of the handheld device so that the front panel is slidable with respect to the back panel, and generating an output signal based on the sensed position of the front panel relative to the back panel.

The method may further include sensing one or more gestures on a touchscreen of the handheld device, and the generated output signal may be further based on the sensed one or more gestures.

The method may further include sensing an orientation of the handheld device, and the generated output signal may be further based on the sensed orientation.

The method may further include generating one or more control signals based on the sensed relative position, the sensed one or more gestures, and the sensed orientation.

The method may further include communicating the generated output signal to the external device.

As described, according to the invention, user convenience can be enhanced because user is enabled to input commands using physical feedback (or tactile feeling) only, without having to check the screen.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1A is a diagram illustrating a user terminal apparatus according to an exemplary embodiment.
FIG. 1B is a diagram illustrating a display system according to an exemplary embodiment;
FIGs. 2A and 2B are block diagrams illustrating a user terminal apparatus according to various exemplary embodiments;
FIG. 2C is a block diagram illustrating an electronic apparatus according to an exemplary embodiment;
FIG. 3 is a diagram illustrating various software modules stored in a storage according to an exemplary embodiment;
FIGs. 4A to 4F are diagrams illustrating a user terminal apparatus according to an exemplary embodiment;
FIGs. 5A to 5F are diagrams illustrating operation of a user terminal apparatus according to an exemplary embodiment;
FIGs. 6A to 6D are diagrams illustrating operation of a user terminal apparatus according to another exemplary embodiment;
FIGs. 7A to 7D are diagrams illustrating operation of a user terminal apparatus according to another embodiment;
FIGs. 8A to 8D are diagrams illustrating operation of a user terminal apparatus according to an exemplary embodiment;
FIGs. 9A to 9G are diagrams illustrating operation of a user terminal apparatus according to exemplary embodiments;
FIGs. 10A and 10B are diagrams illustrating operation of a user terminal apparatus according to an exemplary embodiment;
FIGs. 11A to 11D are diagrams illustrating operation of a user terminal apparatus according to an exemplary embodiment;
FIGs. 12A and 12B are diagrams illustrating operation of a user terminal apparatus according to an exemplary embodiment;
FIGs. 13A to 13C are diagrams illustrating operation of a user terminal apparatus 100 according to another exemplary embodiment;
FIGs. 14A and 14B are diagrams illustrating a control method of a navigation according to another exemplary embodiment;
FIGs. 15A and 15B are diagrams illustrating operation of the user terminal apparatus according to another exemplary embodiment;
FIGs. 16A and 16B are diagrams illustrating operation of the user terminal apparatus according to another exemplary embodiment;
FIGs. 17A and 17B are diagrams illustrating operation of the user terminal apparatus according to another exemplary embodiment;
FIGs. 18A and 18B are diagrams illustrating operation of the user terminal apparatus according to another exemplary embodiment; and
FIGs. 19A and 19B are diagrams illustrating functions of a support according to another exemplary embodiment.

### DETAILED DESCRIPTION OF EXEMPLARY EMBODIMENTS

The following detailed description is provided to assist the reader in gaining a comprehensive understanding of the methods, apparatuses, and/or systems described herein. However, various changes, modifications, and equivalents of the methods, apparatuses and/or systems described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

All terms including descriptive or technical terms used herein should be construed as having meanings that are understood to one of ordinary skill in the art. However, the terms may have different meanings according to an intention of one of ordinary skill in the art, precedent cases, or the appearance of new technologies. Also, some terms may be arbitrarily selected by the applicant, and in this case, the meaning of the selected terms will be described in detail in the detailed description of the disclosure. Thus, the terms used herein have to be defined based on the meaning of the terms together with the description throughout the specification.

Also, when a part "includes" or "comprises" an element, unless there is a particular description contrary thereto, the part can further include other elements, not excluding the other elements. In the following description, terms such as "unit" and "module" indicate a unit for processing at least one function or operation, wherein the unit and the block may be embodied as hardware or software or embodied by combining hardware and software.

One or more exemplary embodiments of the present inventive concept will now be described in greater detail with reference to the accompanying drawings. However, the present inventive concept may be embodied in many different forms, and should not be construed as being limited to the exemplary embodiments set forth herein. Rather, these exemplary embodiments are provided so that this disclosure will be thorough and complete, and will fully convey the inventive concept to those of ordinary skill in the art. In the following description, same drawing reference numerals are used for the similar elements, even in different drawings. Expressions such as "at least one of," when preceding a list of elements, modify the entire list of elements and do not modify the individual elements of the list. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the invention with unnecessary detail.

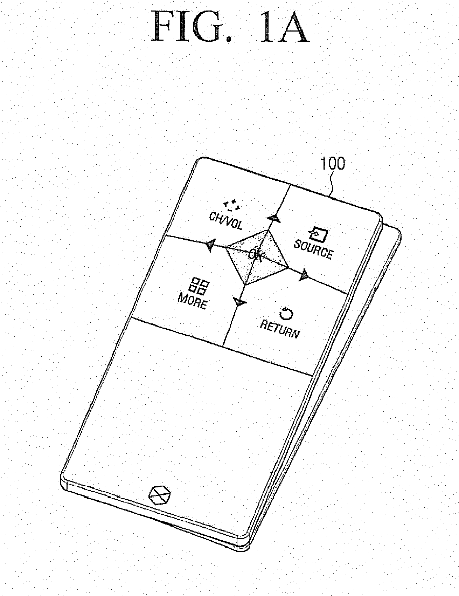

FIG. 1A is a diagram illustrating a user terminal apparatus according to an aspect of an exemplary embodiment.

The user terminal apparatus 100 may be a portable terminal, and implemented as a mobile phone, a personal multimedia player (PMP), a personal digital assistant (PDA), a laptop computer, or the like.

Specifically, the user terminal apparatus 100 may be implemented as two layered panels configured so that the upper panel may slide with reference to the lower panel. For example, sliding in at least one of up, down, left and right directions may be implemented, although directions of sliding are not limited thereto. According to aspects of various exemplary embodiments, the lower panel may slide/be slide in at least one of up, down, left and right directions, with reference to the upper panel. The following will be based on the assumption that the upper panel is able to slide in at least one of up, down, left and right directions with reference to the lower panel.

According to an aspect of an exemplary embodiment, the user terminal apparatus 100 may generate signals corresponding to sliding manipulation status by sensing sliding interaction status, and control at least one of status and function of a display included in the user terminal apparatus 100 according to corresponding signals. Specifically, the user terminal apparatus 100 may generate directional signals corresponding to sliding interactions, and control one or more corresponding functions of the user terminal apparatus 100 according to the directional signals. For example, a function such as volume-up may be performed in accordance with up directional signals generated based on an upward sliding interaction.

According to an aspect of an exemplary embodiment, the user terminal apparatus 100 may be implemented as a touch-based mobile terminal including a touch pad or touch screen on a front side. Accordingly, the user terminal apparatus 100 may include a touch sensor to allow touch interactions using a finger or a pen (e.g., stylus pen). According to an aspect of an exemplary embodiment the user terminal apparatus 100 may include an optical joystick (OJ) utilizing optical technology in order to receive various user commands.

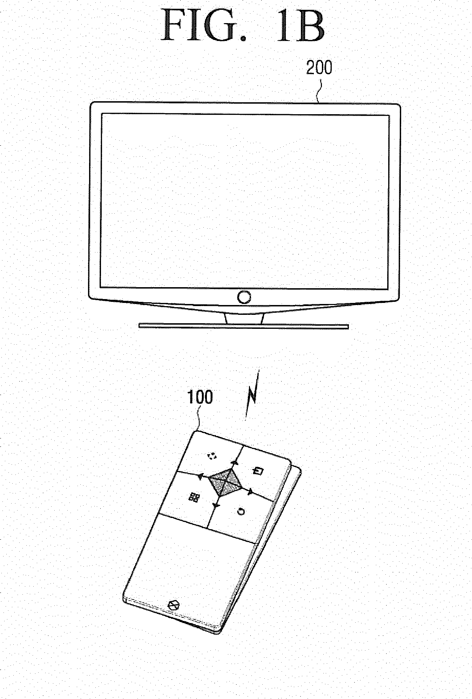

FIG. 1B is a diagram illustrating a display system according to an aspect of an exemplary embodiment.

As shown in FIG. 1B, the display system according to an aspect of an embodiment includes the user terminal apparatus 100 and an electronic apparatus 200.

Herein, the user terminal apparatus 100 may be a remote control device configured to control the electronic apparatus 200.

According to an aspect of an exemplary embodiment, the user terminal apparatus 100 may generate signals corresponding to a sliding interaction status by sensing the sliding interaction status, and controlling functions of the electronic apparatus 200 by transmitting corresponding signals to the electronic apparatus 200. Herein, the sliding interaction status may include at least one of sliding direction, sliding degree, sliding time and sliding velocity.

For example, the user terminal apparatus 100 may generate directional signals corresponding to a sliding interaction direction, and control at least one of a corresponding display status and a function to be performed with the electronic apparatus 200 by transmitting the directional signals to the electronic apparatus 200. For example, in response to the up directional signals generated in response to the up directional sliding interaction, the function, such as volume-up, may be performed in the electronic apparatus 200.

Further, the user terminal apparatus 100 may perform functions, such as providing a user interface (UI) screen to control the electronic apparatus 200 on the touch screen, and transmitting signals corresponding to user touch manipulation input through corresponding UI screen to the electronic apparatus 200.

According to exemplary aspects of exemplary embodiments, the user terminal apparatus 100 may be implemented in various forms. For example, the user terminal apparatus 100 may transmit signals corresponding to the motion sensed by the user terminal apparatus 100, signals corresponding to recognized voices, or signals corresponding to input keys. The user terminal apparatus 100 may be implemented to further include a motion sensor, a microphone, or a physical button (e.g., tact switch).

As illustrated in FIG. 1B, electronic apparatus 200 may be, for example, a digital TV. However, this is not meant to be limiting and the electronic apparatus 200 may be any one of various types of devices configured to provide a display function, such as personal computer (PC), a global positioning system device (GPS), a kiosk, a digital information display (DID), or the like. According to aspects of exemplary embodiments, the electronic apparatus 200 may be implemented without the display function, provided that the user terminal apparatus 100 can control the electronic apparatus 200.

The electronic apparatus 200 may receive signals corresponding to at least one of the sliding interaction and the user touch manipulation input through the user terminal apparatus 100, and may be controlled in response to the received signals. Specifically, the electronic apparatus 200 may provide various screens in response to the signals received from the user terminal apparatus 100.

Further, the electronic apparatus 200 may transmit signals corresponding to at least one of a display status and a provided function to the user terminal apparatus 100. According to an aspect of an exemplary embodiment, the user terminal apparatus 100 may provide a user interface (UI) screen corresponding to at least one of the display status and the provided function of the electronic apparatus 200.

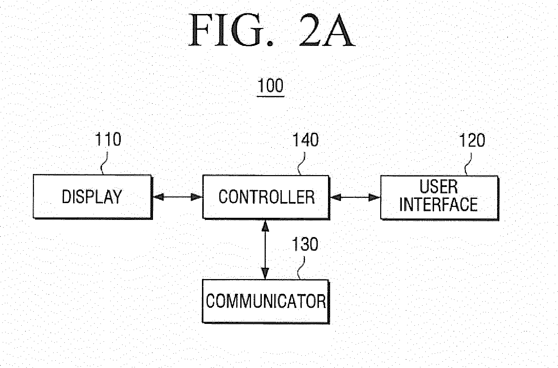

FIG. 2A is a block diagram of the user terminal apparatus 100 according to an aspect of an exemplary embodiment.

As shown in FIG. 2A, the user terminal apparatus 100 may include a display 110, a user interface 120, a communicator 130 and a controller 140.

### Displayed Information

When the user terminal apparatus 100 is implemented as a remote control device configured to control the external electronic apparatus 200, the display 110 may provide various UI screens to control functions of the electronic apparatus 200. For example, a menu screen may be provided that displays various functions of the electronic apparatus 200 that can be selected, and a UI screen that displays various modes that can be selected. Herein, the UI screen may include various content playing screens such as an image, a video, a text, and a song, an application running screen including various content, a web browser screen, or a Graphic User Interface (GUI) screen.

According to another aspect of an exemplary embodiment, when the electronic apparatus 200 is implemented as a digital TV, the display 110 may provide one or more of a UI screen for changing channels, a UI screen for adjusting volume, a UI screen for selecting content, or a UI screen for application selecting. The display 110 may be a Liquid Crystal Display (LCD) Panel or an Organic Light Emitting Diodes (OLED), although not limited thereto. Further, in some embodiments, the display 110 may be a flexible display or a transparent display.

### User Interface (UI) Structure

The user interface 120 may be implemented to receive sliding interactions through the slidable layered panels. Herein, the layered panels may include a first panel and a second panel arranged on the upper face of the first panel so as to be able to slide toward up, down, left and right directions relative to the first panel.

Further, the user interface 120 may include a guide configured to guide the first panel and the second panel to slide while overlapped with each other.

According to an aspect of an exemplary embodiment, the guide may include a plurality of grooves formed on the rear surface of the second panel, respectively corresponding to a plurality of projections on the front surface of the first panel. The plurality of projections may be respectively inserted into the grooves of the second panel so as to be moveable within the grooves with respect to sliding directions of the second panel.

For example, when the user interface 120 provides the sliding in up, down, left and right directions, a plurality of grooves may include a first groove formed on the lower portion of the front surface in the first panel and at least one second groove formed on the upper portion of the front surface in the first panel. The first and the second grooves may be formed as long holes and may be arranged along the moving directions of the second panel. Further, the second groove may include an auxiliary groove extending in left and right moving directions of the second panel.

The guide may guide the second panel to slide within a preset distance toward one or more preset directions.

Specifically, the guide may guide the second panel to circularly slide to one side along a circular arc, the circular arc being formed from a preset sliding direction and based on a preset reference point. For example, when the user interface 120 provides sliding toward up, down, left and right directions, the guide may guide the second panel to slide circularly toward one side, along a circular arc having a radius from the guide projection formed on the rear surface of the second panel to the guide groove formed on the rear surface of the first panel, relative to left and right directional sliding.

The above shape of the guide is merely one aspect of an exemplary embodiment, and the guide may be implemented in various forms. For example, an elastic member may be adopted to allow the second panel to slide.

According to an aspect of an exemplary embodiment, the guide may be arranged between the first and the second panels and include a restoring member to restore the second panel to a preset original position. The restoring member may be implemented with an elastic material.

According to an aspect of an exemplary embodiment, the user interface 120 may include a physical guide to guide user interaction on the touch screen. Although the physical guide may be implemented in various forms, according to an aspect of an exemplary embodiment, the physical guide may tilt downward from the crossed center to surrounded directions. The user interface 120 may receive user touch interaction with respect to at least one of up and down, left and right directions based on the shape of the physical guide. Thereby, the form of the input interaction may be recognized through tactile feelings without having to view the user terminal apparatus 100.

The user interface 120 may receive various user commands through various UI screens to control functions of the electronic apparatus 200 provided through the display 110. According to an aspect of an exemplary embodiment, the user interface 120 may be a touch screen having an interlayer structure with the touch pad. Thereby, the user interface 120 may be utilized as display 110 described above.

### Interoperation of Electronic Apparatus and User Terminal Apparatus

The communicator 130 may communicate with the electronic apparatus 200. Herein, the communicator 130 may communicate with the electronic apparatus 200 or external server in accordance with one or more of various communication methods, such as Bluetooth (BT), wireless fidelity (WIFI), Zigbee, Infrared (IR), serial interface, universal serial bus (USB), near field communication (NFC), or the like.

Specifically, in response to occurrence of a preset event, the communicator 130 may interoperate by communicating with the electronic apparatus 200 according to a predefined communication method. Herein, interoperating may refer to any status in which communication is available, such as an operation to initialize communication between the user terminal apparatus 100 and the electronic apparatus 200, an operation to form a network, an operation to perform the device pairing, or the like. For example, device identification information of the user terminal apparatus 100 may be provided to the electronic apparatus 200, and the pairing process between the two devices may be performed accordingly. As another example, in response to a preset event occurring in the user terminal apparatus 100, interoperating may be performed by searching surrounding devices through Digital Living Network Alliance (DLNA) technology and performing the pairing with a surrounding device.

Herein, the preset event may occur in at least one of the user terminal apparatus 100 and the electronic apparatus 200. For example, a user command for selecting the electronic apparatus 200 as a controlled device may be input from the user terminal apparatus 100, or the electronic apparatus 200 may be powered on.

### Reception of Information from Electronic Apparatus

When the user terminal apparatus 100 interoperates with the electronic apparatus 200, the communicator 130 may transmit signals corresponding to the user command input through the user interface 120 to the electronic apparatus 200, or receive various pieces of status information from the display apparatus 200.

Specifically, the communicator 130 may receive various pieces of status information from the electronic apparatus 200 regarding, for example, operating in a corresponding mode, exiting from a corresponding mode or entering into at least one of a broadcasting viewing mode in which a real time broadcasting channel is viewed, a content playing mode in which video on demand (VOD) content is played back, a menu providing mode in which a preset menu is provided, a game mode in which a game is played, and a web mode in which a web browser is provided.

The communicator 130 may receive information from the electronic apparatus 200 regarding a corresponding detailed function if a detailed function is performed even when the electronic apparatus 200 is in a specific mode. For example, when the electronic apparatus 200 is adjusting the volume or requesting volume adjustment in the broadcasting viewing mode, the communicator 130 may receive corresponding status information from the electronic apparatus 200. For example, when the electronic apparatus 200 is in mute status, the communicator 130 may receive corresponding status information.

### Reception of Information from External Server

Further, the communicator 130 may communicate with an external server.

Specifically, the communicator 130 may receive information regarding a UI screen corresponding to a status of the electronic apparatus 200, control information corresponding to UI information, and various pieces of information provided through the display 110 from the external server. For example, the communicator 130 may receive corresponding information from the external server when the user terminal apparatus 100 provides a social networking service (SNS) screen in response to user commands.

Meanwhile, the external server may update information regarding the user terminal apparatus 100 and the electronic apparatus 200 by connecting to the internet through network. For example, device driver information, control information UI information, or the like may be updated.

### Standby Mode

The controller 140 may control general operation of the user terminal apparatus 100.

While in a standby mode, the controller 140 may operate in a wallpaper mode that displays content, such as a widget, an idle application, a picture, an animation, or the like.

Specifically, the controller 140 may display widgets such as a clock, a weather, or a calendar in the standby mode or provide idle applications such as an alarm, a speed dial, a my menu, a music player, or the like in the standby mode.

Further, the controller 140 may provide content customized by a user in the standby mode. Herein, the content customized by a user may include, for example, family picture content.

Further, the controller 140 may modify and display wallpaper content provided in the standby mode in response to various events. For example, when a preset time passes, the controller 140 may automatically modify and display wallpaper content. Further, when an event, such as receiving a message or an alarm occurs, the controller 140 may display modified wallpaper content to include corresponding event descriptions, or provide reminders regarding corresponding messages and alarms.

### Initial Screen

The controller 140 may control an initial screen to be displayed in response to a preset event occurring.

Specifically, the controller 140 may display the initial screen when a user gripping motion is recognized, and the gripping motion may be recognized through various sensors.

According to an aspect of an exemplary embodiment, the controller 140 may recognize that the gripping motion is performed and display the initial screen when a user touch is sensed through the touch sensor provided on at least one of both side surfaces and the rear surface of the user terminal apparatus 100.

According to another aspect of an exemplary embodiment, the controller 140 may recognize that the gripping motion is performed and display the initial screen when at least one of rotation and tilt is sensed through at least one of a gyro sensor and an acceleration sensor included in the user terminal apparatus 100.

According to another aspect of an exemplary embodiment, the controller 140 may display the initial screen in response to sensing a user approaching is sensed through the near field sensor.

Meanwhile, the controller 140 may provide a shortcut menu regarding main categories and favorite categories provided from the electronic apparatus 200. The shortcut menu performs a function that immediately implements a corresponding menu simultaneously with the electronic apparatus 200 being turned on. When the shortcut menu is selected, the controller 140 may transmit turn-on signals to turn on the electronic apparatus 200, as well as selecting signals regarding the corresponding menu to the electronic apparatus 200.

Thereby, a corresponding menu may be selected simultaneously with powering on the electronic apparatus 200. For example, when a VOD content based category menu is selected while the electronic apparatus 200 is off, the VOD content based category menu may be requested simultaneously with the electronic apparatus 200 being turned on.

Examples of the shortcut menu regarding main content categories provided from the electronic apparatus 200 include, but are not limited to, a real-time TV viewing category, a VOD content based category, an SNS content sharing based category, an application providing category and a personal content category. Examples of the shortcut menu regarding favorite categories include but are not limited to, a previously-viewed menu, a currently-broadcast menu, a message menu, and an input source menu may. Herein, the previous viewing menu may include but are not limited to, thumbnails of a recently viewed VOD, a screen displayed at a closing time, a web page screen, and application information. Herein, when the screen at the closing time is provided, it may be implemented so that viewing can be resumed at a corresponding time point by selecting a corresponding menu. Further, the web page screen may be implemented so that URL information may be stored together with images and the corresponding web page can be immediately provided by transmitting URL information to the electronic apparatus 200 in response to selection of the corresponding menu. Regarding the application, when the application closes while processing, it may be implemented that a screen corresponding to the screen displayed at the closing time can be immediately provided.

### Providing UI Screen

The controller 140 may provide a corresponding UI to the display 110 based on status information regarding context of the electronic apparatus 200 received through the communicator 130, or a corresponding UI to the display 110 in response to user commands input through the user interface 120. Herein, a context of the electronic apparatus 200 may indicate a situation requesting control, and may include various status and situations, such as functions provided from the electronic apparatus, types of provided content, panels of provided video, display status, or the like.

For example, a corresponding UI may be provided from the electronic apparatus 200 based on the content type. However, the corresponding UI may be provided in response to the touch interaction input through the user interface 120.

Specifically, the controller 140 may provide a UI corresponding to the menu on the display 110 when entering at least one of the broadcasting viewing mode, the content playing mode to reproduce VOD content, the menu providing mode, the game mode, and the web mode, or when receiving status information indicating that a corresponding mode is operating.

Further, if received status information indicates that a detailed function provided in specific mode is performed, even when operating at specific mode, the controller 140 may provide a UI corresponding to the function on the display 110.

For example, when the electronic apparatus 200 is operating in mute status, the controller 140 may provide a UI for volume adjusting on the display 110 in response to receiving corresponding status information.

### Control of External Device through Sliding Interaction

The controller 140 may modify a status of the electronic apparatus 200 by transmitting signals corresponding to a user command input through the user interface 120 to the electronic apparatus 200.

Specifically, when a sliding interaction is input through the layered panels, the controller 140 may transmit signals corresponding to the input sliding interaction to the electronic apparatus 200.

Herein, the sliding interaction status may include at least one of a sliding direction, a sliding degree, a sliding time, a sliding velocity (e.g. speed and direction), a sliding speed, a sliding acceleration, or the like.

According to an aspect of an exemplary embodiment, signals corresponding to the sliding interaction status may be signals to provide sliding animation effects regarding display status of the electronic apparatus 200 based on at least one of sliding direction, sliding degree, sliding time, a sliding velocity, or the like.

Further, signals corresponding to the sliding interaction status may be signals to provide a preset type of UI screen on the screen of the electronic apparatus 200 from at least one of a sliding interaction direction and a direction opposite to the sliding interaction direction.

Specifically, signals corresponding to the sliding interaction status may be signals to move a currently displayed UI on the screen of the electronic apparatus 200 toward the sliding interaction direction, and provide a new UI associated with the currently displayed UI from the direction opposite to the sliding interaction direction.

Further, signals corresponding to the sliding interaction status may be signals to provide a preset type of UI previously mapped toward a corresponding direction from at least one of the sliding interaction direction and the direction opposite to the sliding interaction direction on the screen of the electronic apparatus 200.

Specifically, signals corresponding to the sliding interaction status may include at least one signal among signals to provide a preset type of UI, signals to convert UI pages, signals to move an object (e.g., cursor or highlight), signals to adjust the volume, signals to change the channel, signals to scroll, signals to indicate processing degree on the progress bar on the electronic apparatus 200, or the like.

According to an aspect of an exemplary embodiment, the electronic apparatus 200 may perform a corresponding operation based on signals corresponding to a received sliding interaction status according to the display status. Specifically, when signals corresponding to the sliding interaction status are received while an on screen display user interface (OSD UI), or Dashboard UI is displayed on the screen of the electronic apparatus 200, the OSD UI page displayed on the electronic apparatus 200 may be moved toward a direction corresponding to the sliding direction, and a next OSD UI page may be displayed with slide effects from the contrary direction.

Further, at least one of degree, time and velocity of the slide effects displayed on the OSD UI may be controlled based on at least one of degree, time and velocity of the sliding interaction of the user terminal apparatus 100. For example, when a down directional sliding interaction is input at a relatively high velocity, the displayed OSD UI may move quickly toward the down direction, and a new OSD UI may be displayed with the fast slide effects from the upper side. Thus, natural and recognizable function manipulation may be performed by matching position and moving direction of OSD UI with sliding interaction velocity and direction.

The controller 140 may transmit signals corresponding to the sliding interaction status to the electronic apparatus 200, or transmit the status signals generated based on corresponding signals to the electronic apparatus 200.

Specifically, when the controller 140 transmits the status signals to the electronic apparatus 200, the electronic apparatus 200 may generate signals corresponding to the status signals and control itself. For example, when the electronic apparatus 200 is operating to provide a UI screen for content navigation, or when the controller 140 transmits right directional signals to the electronic apparatus 200, the electronic apparatus 200 may generate control signals to modify pages and control the electronic apparatus 200 in response to the received signals.

Further, the controller 140 may generate and transmit control signals corresponding to the directional signals based on the status information of the electronic apparatus 200 and UI type provided to the display 110. For example, when a right directional sliding interaction is sensed while a UI screen for content navigation is provided, the controller 140 may generate and transmit the control signals to modify UI pages to the electronic apparatus 200.

### Sensing Sliding Interaction

The controller 140 may sense sliding interaction based on various sensor values.

According to an aspect of an exemplary embodiment, the controller 140 may determine at least one of direction, degree, velocity and time of the sliding by using the values sensed by at least one of a geomagnetic sensor, a gyro sensor and an acceleration sensor that are provided on the upper panel.

According to an aspect of an exemplary embodiment, the controller 140 may sense the sliding interaction by using a member having a magnetic interaction of some kind (e.g. a generated and/or sensed magnetic field).

The sensor including the member having the magnetic interaction may sense the sliding interaction by sensing changes in magnetic density (or changes in magnetic field) in response to position moving of the upper panel.

According to other aspects of exemplary embodiments, a Hall effect sensor or Magnetoresistance (MR) sensor may be utilized.

Any of the above described sensors may be provided singularly; however, a plurality of sensors may be provided to enhance quality in sensing the sliding.

Furthermore, the above described methods are not meant to be limiting, and other related methods that can sense the sliding interaction may be also utilized.

### Control of External Device through Sliding Interaction and Touch Interaction

When a touch interaction is input, the controller 140 may transmit status signals corresponding to the input touch interaction to the electronic apparatus 200. According to an aspect of an exemplary embodiment, the controller 140 may transmit the status signals corresponding to the sliding interaction to the electronic apparatus 200, or transmit the control signals generated based on the status signals to the electronic apparatus 200.

Specifically, the controller 140 may generate control signals corresponding to the status signals based on the status information of the electronic apparatus 200 and the UI type provided on the display 110, and transmit the control signals to the electronic apparatus 200. For example, when an up directional touch manipulation is sensed on the physical guide while providing the volume adjusting UI on the display 110, the controller 140 may generate control signals to turn up the volume of the electronic apparatus 200, and transmit the generated control signals to the electronic apparatus 200.

Herein, signals corresponding to the touch interaction status on the physical guide may be signals to move UI pages, signals to move an object, signals to adjust the volume, signals to scroll, and signals to indicate proceeding degree on the progress bar.

Meanwhile, the controller 140 may generate control signals having different units regarding the sliding interaction through the layered panels and the touch interaction through the physical guide.

For example, the controller 140 may generate control signals on a page basis and control signals on an object basis through the physical guide. As another example, the controller 140 may generate control signals on a group basis and control signals on an individual object basis through the physical guide.

For example, when a UI screen for changing channels is provided on the electronic apparatus 200, the controller 140 may generate control signals to display a next channel UI page regarding a right directional sliding interaction, and control signals to display position of the selecting UI on next channel information regarding right directional touch interaction on the physical guide.

However, when the controller 140 transmits the status signals to the electronic apparatus 200, it may also transmit identification information with the status signals to identify whether the signals are in response to a touch interaction or a sliding interaction. For example, the identification information may be transmitted to the electronic apparatus 200 in a flag format; the controller 140 may transmit the directional signals with a flag of "1" to indicate a sliding interaction and with a flag of "0" to indicate a touch interaction. According to an aspect of an exemplary embodiment, the electronic apparatus 200 may generate corresponding control signals based on the received flags and directional signals.

Further, when a sliding interaction and a touch interaction are input simultaneously, the controller 140 may transmit signals corresponding to the interaction having priority according to a preset standard. For example, when the sliding interaction is previously established to have priority in accordance with a user setting, only signals corresponding to the sliding interaction may be transmitted to the electronic apparatus 200. The touch interaction is ignored even if the sliding interaction and the touch interaction are input simultaneously. As another example, when an application order of the sliding interaction and the touch interaction is determined, signals corresponding to the sliding interaction may be first transmitted to the electronic apparatus 200, and signals corresponding to the touch interaction may be next transmitted to the electronic apparatus 200. According to aspects of exemplary embodiments, signals corresponding to the sliding interaction and the touch interaction may be transmitted simultaneously to the electronic apparatus 200.

According to aspects of exemplary embodiments, touch interaction through the physical guide may be substituted with touch interaction corresponding to directional keys displayed on the touch screen.

When a specific item is selected on a UI screen provided through the display 110, the controller 140 may transmit corresponding select signals to the electronic apparatus 200, or provide a corresponding screen to the display 110. Herein, items may include various pieces of information such as content provider information, content information, service provider information, service information, application implementing application, content playing information, and user information. Further, provided information may be displayed with various units such as text, file, image, video, icon, button, menu, and dimensional icon. For example, the content provider information may be provided in a form of icons or logs representing a corresponding content provider, and the content information may be provided in a thumbnail format. Further, user information may be provided in a profile image of each user. Additional information provided from content may be decoded and converted into a thumbnail size. When there is no additional information, original content may be decoded and converted into a thumbnail size; a reduced form of the thumbnail image may be extracted and provided. Herein, the original content may be still image or video format. When the original content is a video format, a thumbnail image in animation video format may be created with a plurality of still images.

### Various User Manipulation according to Display Status

The controller 140 may display a UI for changing a broadcast channel on the touch screen when the electronic apparatus 200 enters the broadcasting receiving mode, and transmit signals to the electronic apparatus 200 to change a channel corresponding to the sliding interaction status when sliding interaction is input. For example, the touch screen may provide a UI indicating a currently selected channel number, as well as previous and next channel numbers.

Further, when a specific broadcasting channel is selected on the electronic apparatus 200, the controller 140 may display a UI for adjusting volume on the touch screen. When a sliding interaction is input, the controller 140 may transmit signals to the electronic apparatus 200 to adjust volume corresponding to the sliding status. For example, the touch screen may provide a UI indicating a volume adjusting status.

Further, when the electronic apparatus 200 enters a menu selecting mode, the controller 140 may display a UI for selecting a menu on the touch screen, and transmit directional signals to the electronic apparatus 200 to convert a page corresponding to the sliding status when a sliding interaction is input. According to an aspect of an exemplary embodiment, the controller 140 may display a UI indicating four directional keys to move the selecting GUI on the touch screen, and transmit directional signals to the electronic apparatus 200 to move the selecting GUI toward a direction corresponding to the selected directional key when one of the four directional keys is selected.

Further, when the electronic apparatus 200 enters the character inputting mode, the controller 140 may display a character inputting UI on the touch screen, and transmit signals corresponding to the input characters to the electronic apparatus 200 when characters are input through the character inputting UI.

### Mode of User Terminal Apparatus

The controller 140 may provide a UI screen regarding one mode among a vertical mode and a horizontal mode according to a status of the electronic apparatus 200.

Specifically, the controller 140 may provide a UI corresponding to the horizontal mode when the electronic apparatus 200 is operating in a status that can be easily controlled in the horizontal mode of the user terminal apparatus 100. For example, when a web page is provided by the electronic apparatus 200, the user terminal apparatus 100 may be utilized in the horizontal mode. According to an aspect of an exemplary embodiment, an area provided with the physical guide may receive a scroll manipulation command input through the physical guide, and a touch screen area provided without the physical guide may receive a user command to adjust cursor position. As another example, when a preset game is running on the electronic apparatus 200, a direction manipulation command may be input through the area provided with the physical guide, and a user command to perform a specific function may be input through the touch screen area provided without the physical guide.

### Controlling Function of Other Electronic Devices

The user terminal apparatus 100 may be used to control various electronic devices, such as an air conditioner, a car, a refrigerator, and a washing machine, in addition to a display apparatus such as a digital TV.

Specifically, the user terminal apparatus 100 may be utilized as remote control device for various home devices, or in controlling control screens corresponding to home devices provided on a display apparatus, such as a digital TV. Therefore, according to an exemplary embodiment, sliding interactions may be implemented to control various functions of various electronic devices.

For example, the user terminal apparatus 100 may be configured to adjust a thermostat setting of the air conditioner through up and down directional sliding interactions, and adjust a fan speed through left and right directional sliding interactions.

As another example, a dimensional arrangement of home devices can be provided on the digital TV, and the home devices can be selected and controlled through a corresponding dimensional arrangement. The user terminal apparatus 100 sliding interactions may be implemented to control the home devices. Specifically, for example, when the refrigerator is selected to be controlled, the user terminal apparatus 100 may provide a status providing screen that displays items currently in the refrigerator. In one exemplary embodiment, the image displayed on the status providing screen may be obtained through a camera included within the refrigerator. A user may adjust a photographing direction of the camera within the refrigerator in real time through a sliding interaction and confirm the contents of the refrigerator. Thus, a user can confirm and order necessary items without opening the refrigerator.

As still another example, the user terminal apparatus 100 may be utilized to adjust a photographing direction of a closed circuit television (CCTV) to provide home security related screens through sliding interaction.

### Navigation Control

When the electronic apparatus 200 is implemented to be a front and center display of a car, e.g., a navigation device, the user terminal apparatus 100 enable navigation of menu items provided on UI screen of the electronic apparatus 200 through a sliding input. However, the type of electronic apparatus 200 is not limited, and the sliding mode can be applied to any device connected to the user terminal apparatus 100 and providing a UI to be controlled by the sliding interaction input through the user terminal apparatus 100.

According to an aspect of an exemplary embodiment, the electronic apparatus 200 may receive information corresponding to the sliding interaction of the user terminal apparatus 100, and navigate menu items provided from a UI screen according to the received information.

Specifically, because a user can recognize a command input through the sliding interaction of the user terminal apparatus 100, the user may navigate menu items provided on the UI screen of the navigation device without having to view the user terminal apparatus 100.

Therefore, user convenience can be enhanced because a UI screen of the navigation device may be controlled by inputting sliding interaction without directly performing touch manipulation on the navigation device and without viewing the user terminal apparatus 100.

### Terminal Function

Sliding interactions of the remote control device may be utilized to control various functions provided of the user terminal apparatus 100.

Specifically, when the user terminal apparatus 100 is a terminal configured to perform specific functions, such as a mobile phone, an MP3 player, a PMP, or the like, it may be configured to control functions of the user terminal apparatus through a sliding interaction.

For example, when the user terminal apparatus 100 provides a music player function, various manipulations associated with the music player function may be performed through a sliding interaction. Specifically, a volume adjusting function may be performed through up and down directional sliding interactions, and the function of playing a previous and a next music song may be performed through left and right directional sliding interactions.

As another example, when the user terminal apparatus 100 provides a radio function, various manipulations associated with the radio function may be performed through sliding interaction. Specifically, a volume adjusting may be performed through up and down directional sliding interactions, and a radio frequency tuning may be performed through left and right directional sliding interactions.

The function controlled is not limited, and the above examples are merely aspects of exemplary embodiments. Functions that can be controlled through sliding interaction can be variously modified.

Therefore, a user can control various functions provided from the user terminal apparatus 100 through physical feedback without directly viewing the user terminal apparatus 100.

### Support

The support arranged on the rear surface of the user terminal apparatus 100 may have a projected form, and can be held toward any one direction on a supportable object, such as table. For example, the support may be implemented as a pyramid shape, although not limited thereto.

Further, the support may encourage a gripping motion because of a dimensional shape, e.g., a pyramid shape. For example, the related user terminal apparatus in a plane shape may not encourage the gripping of the device. However, the support in a pyramid shape, according to an aspect of an exemplary embodiment, may naturally encourage the gripping the device.

Further, the support may be a rear surface case cover that can be detached from the user terminal apparatus 100. When the support is attached to another user terminal apparatus, the other user terminal apparatus may be configured to perform a uniform function of the other user terminal apparatus 100, e.g., to provide the remote controlling function.

According to an aspect of an exemplary embodiment, the support may be provided with a near field communication (NFC) tag including software associated with a remote controlling function. When it is attached to another user terminal apparatus, the support may be configured to automatically activate the remote controlling function. For example, when the support is attached to another user terminal apparatus, the another user terminal apparatus may automatically activate the remote controlling function through communication with the NFC tag, and provide an initial screen as described above.

Further, according to various aspects of exemplary embodiments, the NFC tag may be implemented to provide various functions by modifying and storing software with TecTiles. For example, a sliding interaction can perform different controlling functions by using a TecTile to control TV functions, a TecTile to control game functions, and a TecTile to control the navigation.

Therefore, a remote controller application does not have to be downloaded and loaded whenever an application is installed, instead the remote controlling function can be automatically activated with the simple method of attaching the rear surface case cover.

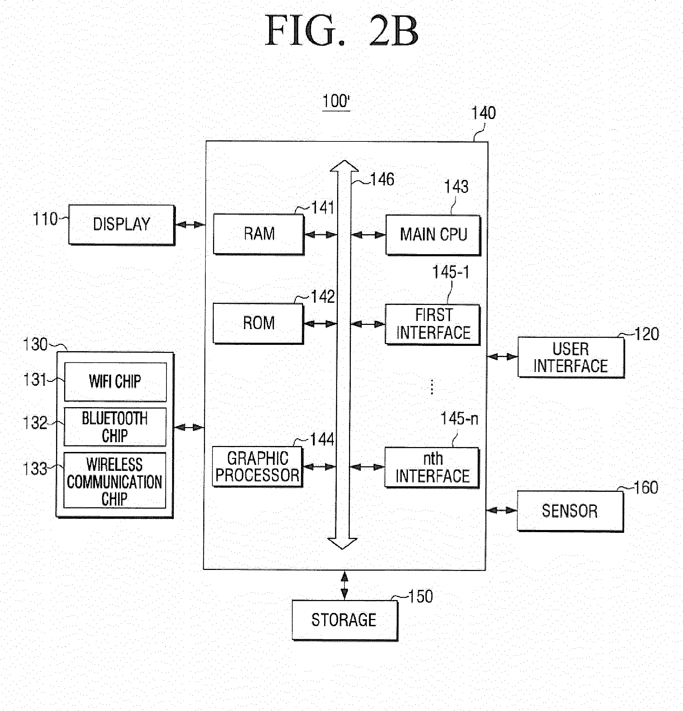

FIG. 2B is a block diagram illustrating a user terminal apparatus according to another exemplary embodiment.

As shown in FIG. 2B, the user terminal apparatus 100' includes a display 110, a user interface 120, a communicator 130, a controller 140, and a storage 150, and a sensor 160.

The communicator 130 may perform communication with an external device, e.g., the external electronic apparatus 200, or the external server, according to various communication methods, as described above.

The communicator 130 includes one or more of various communication chips, such as a WIFI chip 131, a Bluetooth chip 132, and a wireless communication chip 133. The WIFI chip 131 may communicate according to a WIFI method and the Bluetooth chip 132 may perform communication according to a Bluetooth method. The wireless communication chip 133 indicates a chip configured to communicate according to various communication standards, such as IEEE, Zigbee, 3G (3^{rd} Generation), 3GPP (3^{rd} Generation Partnership Project), LTE (Long Term Evolution), or the like. According to an aspect of an exemplary embodiment, the communicator 130 may further include an NFC chip that operates according to an NFC method.

The controller 140 controls general operation of the user terminal apparatus 100' by utilizing a plurality of programs stored in the storage 150.

Specifically, the controller 140 includes a random access memory (RAM) 141, a read only memory (ROM) 142, a main central processing unit (CPU) 143, a graphic processor 144, a plurality of n interfaces 145-1 - 145-n, and a bus 146.

The RAM 141, the ROM 142, the main CPU 143, the graphic processor 144, and the plurality of n interfaces 145-1 - 145-n may be connected with each other through the bus 146.

The plurality of n interfaces 145-1 - 145-n may connect the above described units. One of the interfaces may be a network interface connected with external devices through a network.

The main CPU 143 may access the storage 150, and boot by utilizing an operating system (O/S) stored in the storage 150. Further, the main CPU 143 may perform various operations by utilizing a plurality of programs, content and data stored in the storage 150.

The ROM 142 may store a command to boot the system. When a turning-on command is input and electrical power is supplied, the main CPU 143 may copy the O/S stored in the storage 150 to the RAM 141, in response to the stored command in the ROM 142, and boot the system by implementing O/S. When booting completes, the main CPU 143 may copy a plurality of application programs stored in the storage 150 to the RAM 141, and perform a plurality of operations by implementing the application programs copied to the RAM 141.

The graphic processor 144 may generate screens including various objects such as an icon, an image and a text by utilizing a calculator and a renderer. The calculator may calculate feature values such as a coordinate value, a shape, a size and a color in which each object will be marked according to layouts of the screens based on the received controlling command. The renderer may create screens in various layouts including objects based on the calculated feature values in the calculator. The screens created in the renderer may be within a display area of the display 110.

Meanwhile, the above described operation of the controller 140 may be performed with the programs stored in the storage 150.

The storage 150 may store the O/S (Operating System) software module to drive the user terminal apparatus 100' and various data such as multimedia content.

Specifically, the storage 150 may store data to constitute various UI screens provided on the display 110 according to an embodiment.

Further, the storage 150 may store data to generate corresponding control signals to a user command input through various UI screens.

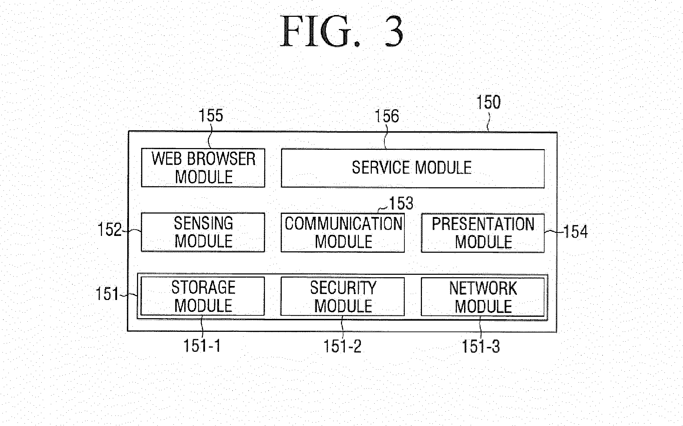

Various software modules stored in the storage 150 will be explained below by referring to FIG. 3.

As shown in FIG. 3, the storage 150 may store software including a base module 151, a sensing module 152, a communication module 153, a presentation module 154, a web browser module 155 and a service module 156.

The base module 151 indicates a basic module that processes signals delivered from each hardware item included in the user terminal apparatus 100' and transmits the processed signals to the upper layer module. The base module 151 includes a storage module 151-1, a security module 151-2 and a network module 151-3. The storage module 151-1 is a program module that manages a database (DB) or a registry. The main CPU 143 may access the database within the storage 150 by reading a plurality of data stored on the storage module 151-1. The security module 151-2 is a program module that supports hardware certification, request permission and secure storage. The network module 151-3 is a module that supports a network connection and includes a DNET module and a Universal Plug and Play (UPnP) module.

The sensing module 152 is module that collects information from a plurality of the sensors, analyzes and manages the collected information. The sensing module 152 may include a touch recognizing module, a head direction recognizing module, a surface recognizing module, a voice recognizing module, a motion recognizing module and an NFC recognizing module.

The communication module 153 is module that performs external communication. The communication module 153 may include a device module to communicate with external devices, a messaging module, such as a messenger program, an SMS (Short Message Service) & MMS (Multimedia Message Service) program and an e-mail program, and a calling module, such as a call information aggregator program module, and a voice over IP (VoIP) module.

The presentation module 154 is a module that includes display screens. The presentation module 154 includes a multimedia module to reproduce and output multimedia content and a UI rendering module to perform the processing of a UI and a graphic. The multimedia module may include a player module, a camcorder module, and a sound processing module. Thereby, the multimedia module may perform the operation of generating and reproducing screens and voices by reproducing a plurality of multimedia content. The UI rendering module may include an image compositor module that combines and generates images, a coordinate combining module that combines coordinates on the screen to display images, an X11 module that receives a plurality of events from hardware, and a 2D/3D UI toolkit that provides tools to create a UI in a 2D or a 3D format.

The web browser module 155 is a module that performs the web browsing and accesses a web server. The web browser module 155 may include various modules such as a web view module to view web pages, a download agent module to perform downloading, a bookmark module, and a webkit module.

The service module 156 is a module that includes a plurality of applications to provide various services. Specifically, the service module 156 may include various program modules such as an SNS program, a content reproducing program, a game program, an electronic book program, a calendar program, an alarm managing program and an other widget.

Although FIG. 3 illustrates various program modules, the illustrated program modules may be partly omitted, modified, or added according to types and features of the user terminal apparatus 100'. For example, a program module may be implemented to further include a position based module that supports a position based service by interoperating with hardware, such as a GPS chip.

The sensor 160 includes the touch sensor, the geomagnetic sensor, the gyro sensor, the acceleration sensor, the near field sensor, and the grip sensor. The sensor 160 may sense various manipulations, such as rotating, tilting, pushing, approaching, and gripping, in addition to the touching described above.

Herein, the touch sensor may be implemented to be capacitive or resistive. The capacitive touch sensor calculates touch coordinates by using coated conductive materials on a surface of a screen and senses micro electric currents that are excited by a body when a part of the body touches or almost touches the display surface. The resistive touch sensor calculates touch coordinates by using two electric plates provided within the user terminal apparatus 100' and senses the flow of electric currents when the body touches so that the upper and the lower plates make contact at the touched points. Other touch sensors may be implemented utilizing the infrared sensing method, the surface ultrasound conductive method, the integral tension measuring method and the piezo effect method.

The user terminal apparatus 100' may determine whether touch objects such as a finger or a stylus pen contact or approach the user terminal apparatus 100' by utilizing a magnetic and magnetic wave sensor, an optical sensor or an approaching sensor instead of the touch sensor.

The geomagnetic sensor is a sensor to sense rotating status and a moving direction of the user terminal apparatus 100'. The gyro sensor is a sensor to sense a rotating angle of the user terminal apparatus 100'. Both of the geomagnetic sensor and the gyro sensor may be provided; however, even when only one of the geomagnetic sensor and the gyro sensor is provided, the user terminal apparatus 100' may sense rotating status.

The acceleration sensor is a sensor that senses a tilting degree of the user terminal apparatus 100'.

The near field sensor is a sensor that senses an approaching motion without directly contacting the display surface. The near field sensor may be implemented to be any of various types of sensors, such as a high frequency emitting type, that forms a high frequency magnetic field and senses electric currents induced with the magnetic features that change when an object approaches, a magnetic type that utilizes the magnetic sensor, and a capacitive amount type that senses a capacitive amount that changes when an object approaches.

The grip sensor is a sensor arranged on the back face/rear surface, the boundary line or the handle separate from the touch sensor provided on the touch screen in the user terminal apparatus 100', and senses the gripping of a user. The grip sensor may include a pressure sensor in addition to the touch sensor.

The user terminal apparatus 100' may further include an audio processor to process audio data, a video processor to process video data, a speaker to output a plurality of alarm sounds, voice messages, or audio data processed in the audio processor, and a microphone to receive user voices or other sounds and convert the received sounds into audio data.

FIG. 2B illustrates one example of the user terminal apparatus 100' according to an exemplary embodiments, some of the units illustrated in FIG. 2B may be omitted or modified, and other units may be added. For example, the user terminal apparatus 100' may further include a DMB (Digital Multimedia Broadcasting) receiver to receive and process DMB signals.

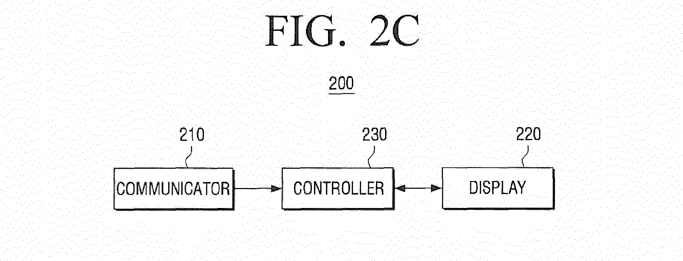

FIG. 2C is a block diagram illustrating the electronic apparatus according to an exemplary embodiment.

The electronic apparatus 200 may be a digital TV, as illustrated in FIG. 1. However, the type of electronic apparatus 200 is not limited. For example, the electronic apparatus 200 may be any device that includes a display function and can be controlled remotely, such as personal computer (PC), a navigator, a kiosk and a digital information display (DID).

The communicator 210 may communicate with the user terminal apparatus 100. Specifically, the communicator 210 may communicate with the user terminal apparatus 100 through any of the above described communication methods.

Specifically, the communicator 210 may receive signals from the user terminal apparatus 100 corresponding to various user manipulations input through the user interface 120.

Further, the communicator 210 may receive signals corresponding to various sliding interaction status input from the user terminal apparatus.

Further, the communicator 210 may transmit signals to the user terminal apparatus 100 corresponding to a status of the electronic apparatus 200 and signals corresponding to functions performed in the electronic apparatus 200.

The display 220 may provide various display screens that can be provided through the electronic apparatus 200.

Specifically, the display 220 may display various UI screens that can be manipulated through the user terminal apparatus 100. For example, the display 220 may display various types of UI screens such as a channel changing screen, a volume adjusting screen, a menu selection screen, and a web page screen.

The controller 230 may control general operation of the electronic apparatus 200.

The controller 230 may control an operating status of the electronic apparatus 200, specifically, the display status, in response to the received signals from the user terminal apparatus 100. Herein, the received signals from the user terminal apparatus 100 may be signals corresponding to sliding interaction signals as described above, and the received signals may be in either a status signal format or a controlling signal format corresponding to the status signals. When the signals received from the user terminal apparatus 100 correspond to a sliding status, the controller 230 may convert the corresponding signals into controlling signals based on the status of the electronic apparatus 200.

The controller 230 may perform different controlling functions according to the display status of the electronic apparatus 200 based on the received signals corresponding to the sliding interaction status. Herein, the sliding interaction status may include at least one of direction, degree, time and velocity regarding sliding.

Specifically, the controller 230 may provide sliding animation effects regarding the display status of the electronic apparatus 200 based on at least one of a sliding direction, a sliding degree, a sliding time and a sliding velocity included in the received signals.

Further, based on the received signals, the controller 230 may provide a preset type of UI screen on the screen from at least one among sliding interaction direction and direction opposite to the sliding interaction direction.

Specifically, the controller 230, based on the received signals, may move a currently displayed UI toward the sliding interaction direction and provide a new UI associated with the currently displayed UI in a direction opposite to the sliding interaction direction.

Further, based on the received signals, the controller 230 may provide a preset type of UI that was previously mapped toward a corresponding direction from at least one of the sliding interaction direction and the direction opposite to the sliding interaction direction.

Further, the controller 230, based on the received signals, may perform at least one function from among a plurality of functions including a function of providing a preset type of UI, a function of converting UI pages, a function of selecting an object, a function of moving an object, a function of adjusting the volume, a function of changing the channel, a scrolling function, and a function of indicating a proceeding degree on the progress bar.

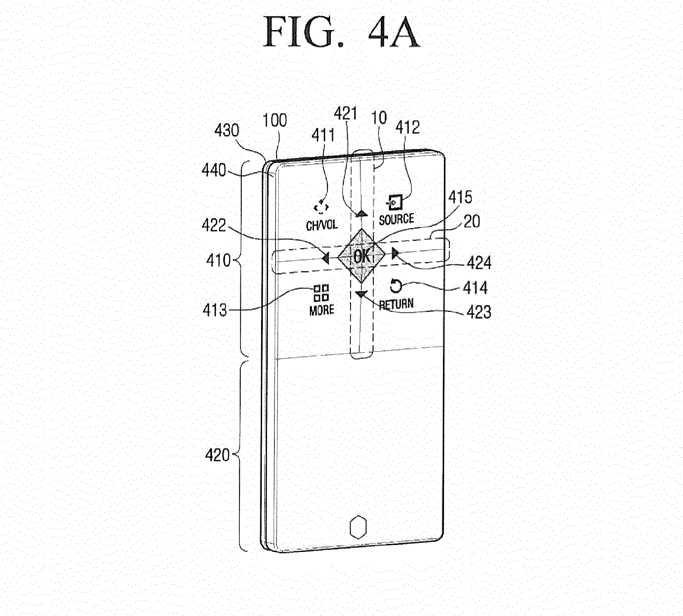

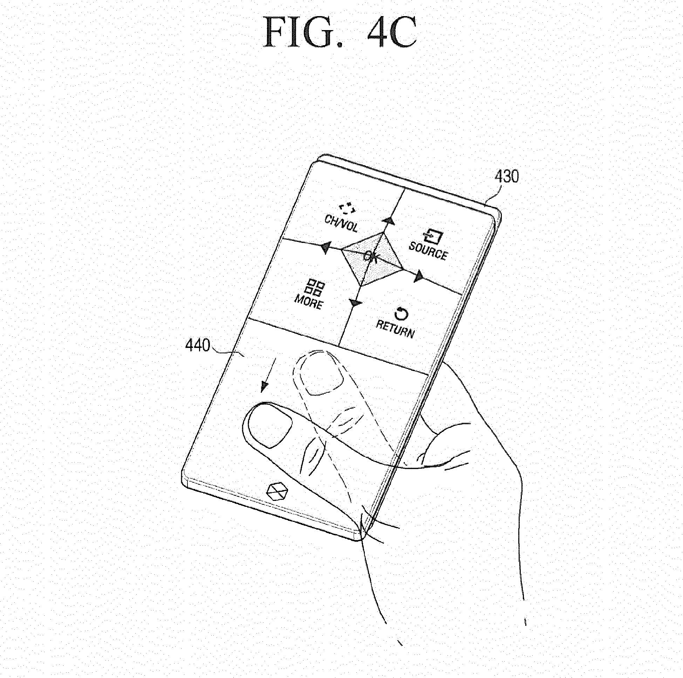

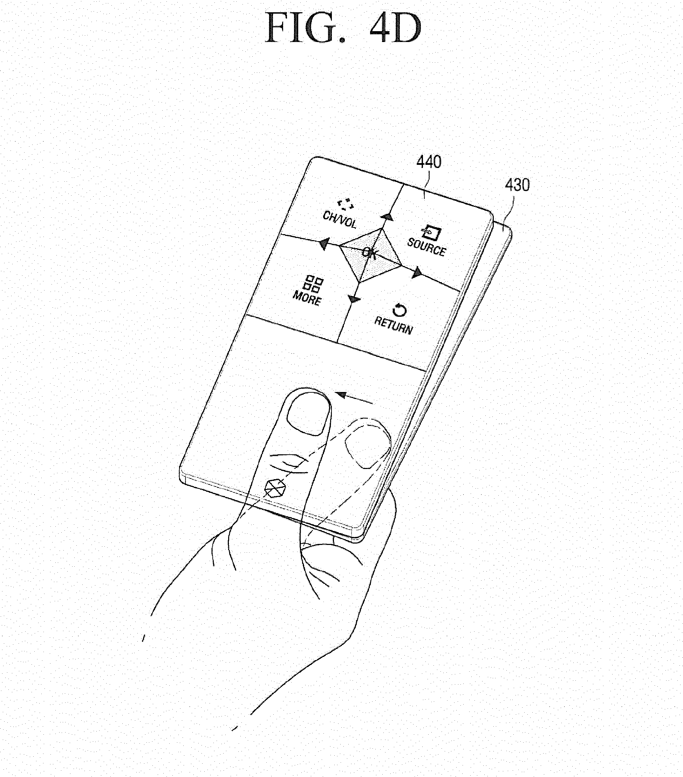

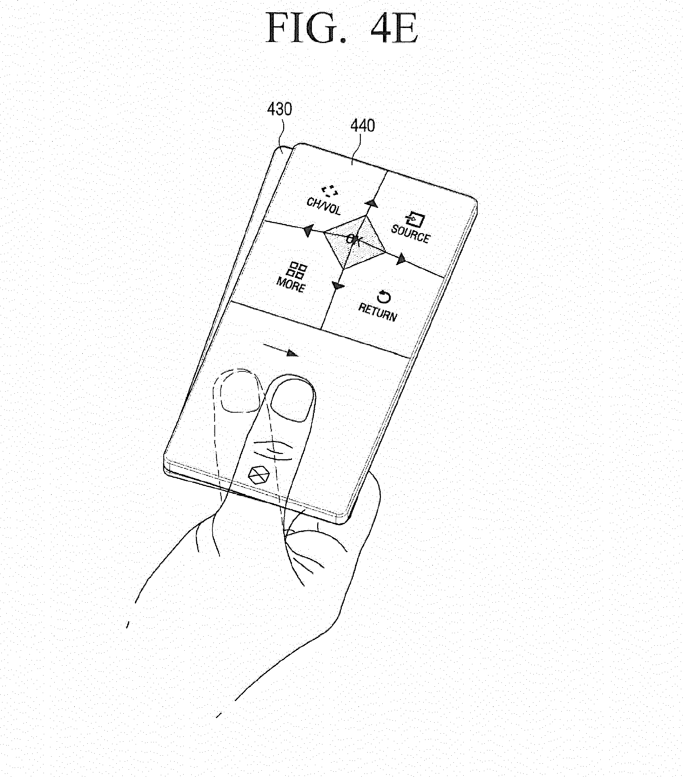

FIGs. 4A to 4E are diagrams illustrating the user terminal apparatus according to an exemplary embodiment.

FIG. 4A illustrates a front view of the user terminal apparatus 100. As illustrated, the front section of the user terminal apparatus 100 may be divided into a first area 410 and a second area 420. Herein, the first area 410 and the second area 420 may include a touch screen. According to an aspect of an exemplary embodiment, the first area 410 and the second area 420 may be distinguished, as the first area 410 includes the physical guide 10, 20 and the second area 420 excludes the physical guide 10, 20. However according to various aspects of exemplary embodiments, the physical guide 10, 20 is not necessarily provided. The following will assume and explain that the physical guide 10, 20 is included.

The first area 410 may be formed on an upper section of the user terminal apparatus 100, and may include first to fourth sub areas 411 to 414 that are divided based on the up, down, left and right directional physical guide 10, 20. Further, the first area 410 may include a fifth sub area 415 formed on the center area of the physical guide 10, 20.

The first to the fifth sub areas 411 to 415 may provide various menu items, and menu items provided on a corresponding area can be modified according to the UI type provided on the first area 410. For example, according to an exemplary embodiment, the first to the fifth sub areas 411 to 415 may provide a channel/volume menu, a source menu, an additional menu item menu, a return menu, and a confirm menu, as illustrated. However, according to another exemplary embodiment, the first to the fifth sub areas 411 to 415 may provide menus regarding various categories provided in the electronic apparatus 200. For example, the first to the fifth sub areas 411 to 415 may provide menus indicating a real-time TV viewing category, a VOD content based category, an SNS content sharing based category, an application providing category, and a personal content category. However, this is merely an exemplary embodiment, and the first to the fifth sub areas 411 to 415 may provide various menu items according to the UI type.

Meanwhile, various menu items provided in the first to the fifth sub areas 411 to 415 may be shortcut menu items in which a corresponding menu is immediately implemented as the electronic apparatus 200 is turned on according to the corresponding menu item.

For example, the physical guide 10, 20 may be formed to project in a crossed shape and sloping down from the center of the crossed shape toward surrounding directions in the first area 410. Specifically, the physical guide 10, 20 may be a shape in which a first projection 10 formed toward up and down directions, and a second projection 20 formed toward left and right directions are crossed with each other at a center area of the crossed shape. Further, four directional buttons 421 to 424 may be provided on the up, down, left and right directions of the physical guide 10, 20.

However, the UI screen is not limiting, and the UI screen illustrated in FIG. 4A is merely an aspect of an exemplary embodiment. The UI screen may be variously modified according to a status of the external electronic apparatus 200 or user commands regarding the user terminal apparatus 100.

The physical guide may be also provided in various shapes. An aspect of an exemplary embodiment will be described below with referring to the drawings.

The structure of the physical guide 10, 20 allows a user to perform various manipulations according to tactile feelings without visually confirming the user terminal apparatus 100. For example, the first physical guide 10 is formed toward the up and down directions, and has a sloped shape to the upper side and the lower side based on the center. A user may perform an up directional manipulation, such as volume-up, by tactilely recognizing the downward sloped area toward the upper side, and perform a downward directional manipulation, such as volume-down, by tactilely recognizing the downward sloped area toward the lower side. Other various exemplary user manipulations through the physical guide 10, 20 will be explained below with referring to the drawings.

Meanwhile, the user terminal apparatus 100 may be implemented as a back panel (or first panel) 430 layered with a front panel (or second panel) 440, so that a sliding interaction can be performed, as illustrated in FIG. 4A.

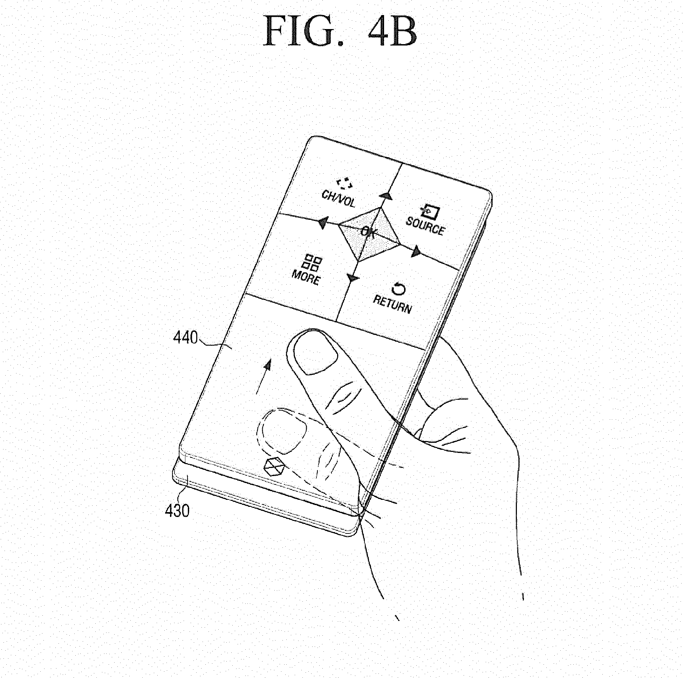

According to an aspect of an exemplary embodiment, the front panel 440 may be configured to slide toward the up, down, left and right directions, in response to user manipulations based on the back panel 430, as illustrated in FIGs. 4B to 4E.

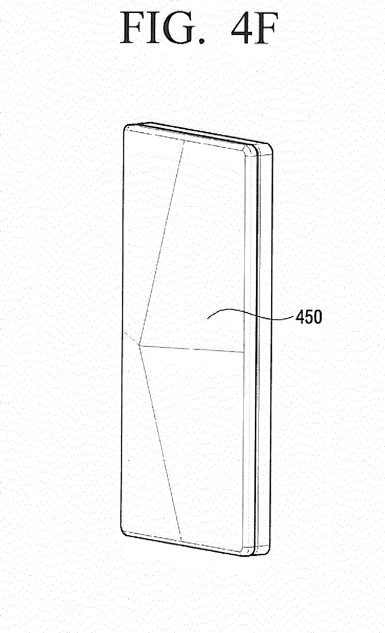

FIG. 4F illustrates a rear view of the user terminal apparatus 100. The rear surface of the user terminal apparatus 100 may include a support 450 projected in a preset shape, e.g., pyramid shape.

The support 450 may be provided so that the user terminal apparatus 100 can be held on a supporting object, such as table. Thus, a user may tilt the user terminal apparatus 100 toward one of four directions supported through the support 450 that is projected in a pyramid shape.

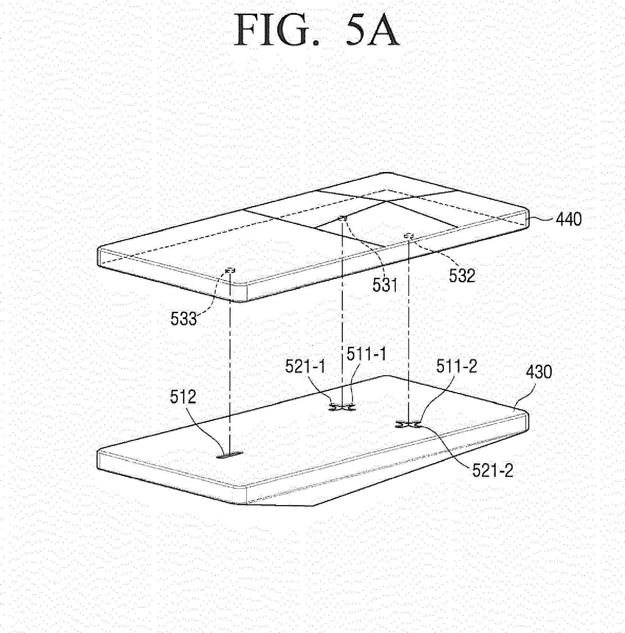

FIGs. 5A to 5F are diagrams illustrating a structure of a front panel and a back panel according to aspects of exemplary embodiments.

As illustrated in FIGs. 5A to 5C, a plurality of projections may be formed on the rear surface of the front panel 440, and a plurality of grooves, that correspond to a plurality of projections may be formed on the front surface of the back panel 430. According to an aspect of an exemplary embodiment, a plurality of the projections formed on the rear surface of the front panel 440 may be respectively inserted into a plurality of the grooves so that each of the projections can move within one or more of the grooves formed on the front surface of the back panel 430 according to sliding direction of the front panel 440.

Further, the plurality of grooves formed on the front surface of the back panel 430 may include the first groove formed on the lower portion of the back panel 430 and at least one second groove formed on the upper portion of the back panel 430.

According to an aspect of an exemplary embodiment, the first and the second grooves may be formed in a long line shape and arranged horizontally according to the up and down moving directions of the front panel 440. The second groove may include an auxiliary groove that extends to the left and right moving directions of the front panel 440.

For example, as illustrated in FIG. 5A, a first groove 512 on the lower side of the front surface in the back panel 430 and second grooves 511-1, 511-2 on the upper side may be formed in a long line shape. The first groove 512 and the second grooves 511-1, 511-2 may be arranged horizontally along the up and down moving directions of the front panel 440. Further, the second grooves 511-1, 511-2 may be provided with auxiliary grooves 521-1, 521-2 that extend toward the left and right sliding directions of the front panel 440. Herein, the auxiliary grooves 521-1, 521-2 may perform the function of guiding left and right sliding to curve toward one side along a circular arc having a radius aligned with the first groove 512 formed on the upper side.

Further, the rear surface of the front panel 440 may be provided with a plurality of projections 531 to 533 respectively formed to correspond to a plurality of the grooves on the front surface on the back panel 430.

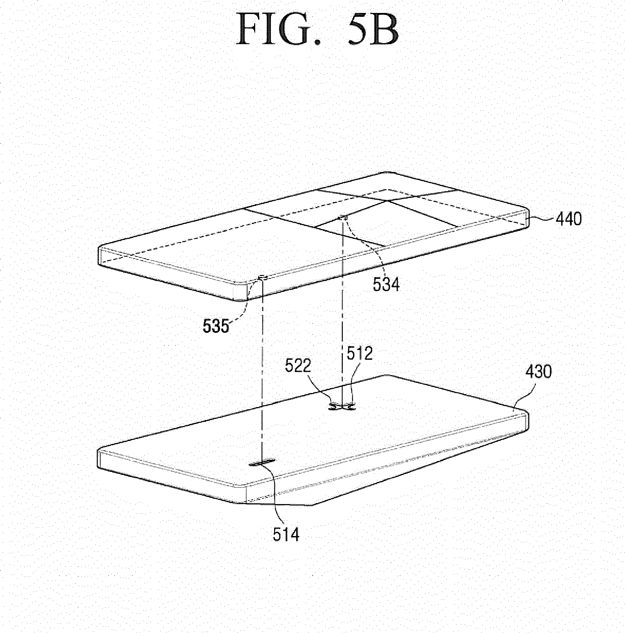

According to another aspect of an exemplary embodiment illustrated in FIG. 5B, , one second groove 512 and one auxiliary groove 522 may be provided on the front surface of the back panel 430 on a left (or right) side of the lower (or upper) side, and a first groove 514 may be provided on the lower side, on the right (or left) side. Further, the rear surface of the front panel 440 may be provided with a plurality of projections 534 and 535, respectively formed to correspond to a plurality of the grooves on the front surface on the back panel 430. According to an aspect of an exemplary embodiment, left and right sliding manipulations may be performed toward a diagonal direction based on the first groove 514.

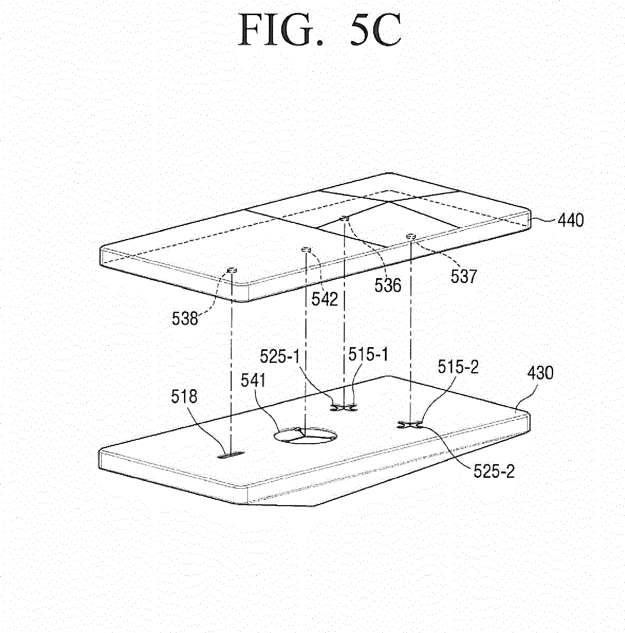

According to still another aspect of an exemplary embodiment illustrated in FIG. 5C, one first groove 518, second grooves 515-1, 515-2 and auxiliary grooves 525-1, 525-2 may be provided on the front surface of the back panel 430. Further, the rear surface of the front panel 440 may be provided with a plurality of projections 536 to 538, respectively formed to correspond to a plurality of the grooves on the front surface on the back panel 430. Additionally, restoring members 541, 542 may be provided to restore the front panel 440 to a preset original position, and may be arranged on at least one of the back panel 430 and the front panel 440. The restoring member 541, 542 are configured to perform a corresponding function between the back panel 430 and the front panel 440. According to an aspect of an exemplary embodiment, the restoring members may be include materials having elasticity.

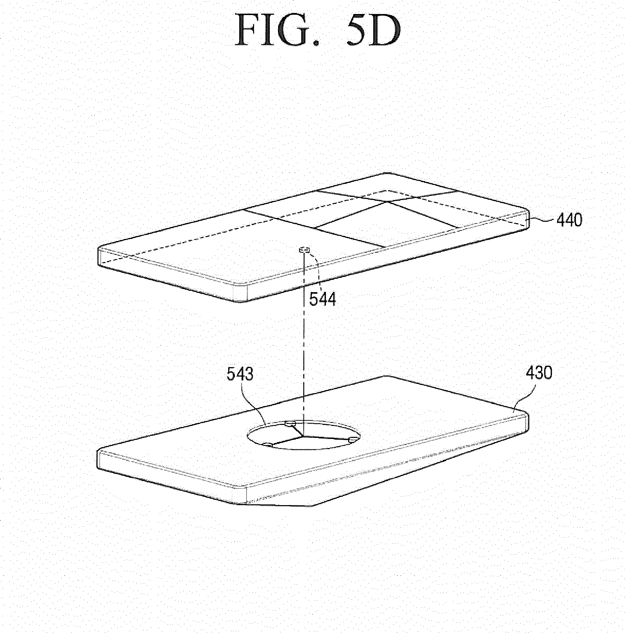

According to another aspect of an exemplary embodiment illustrated in FIG. 5D, restoring members 543, 544 may be provided to restore the front panel 440 to the preset original position with respect to the lower panel 430, and may include materials having elasticity to support up, down, left and right sliding interaction.

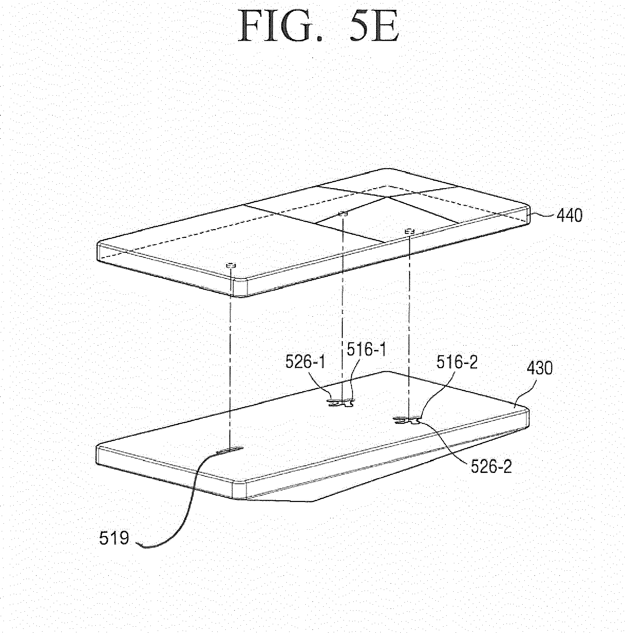

According to another aspect of an exemplary embodiment illustrated in FIG. 5E, a plurality of grooves, including, for example, a first groove 519, second grooves 516-1, 516-2, and auxiliary grooves 526-1, 526-2 may be formed on the front surface of the back panel 430 having various shapes that can support the left and right moving directions of the front panel 440. For example, the auxiliary groove 526 that extends to the second grooves 516-1, 516-2 arranged horizontally along the up and down moving directions, may have a shape that curves toward the lower portion of the back panel 430, as illustrated in FIG. 5E.

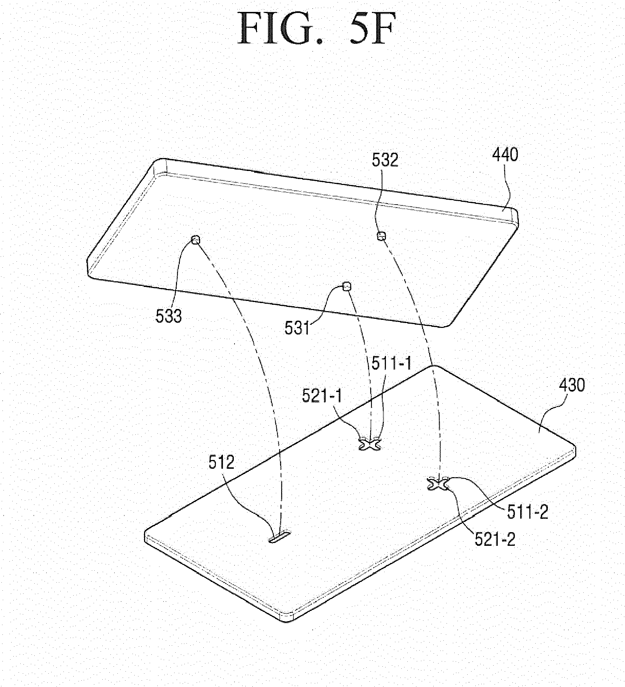

FIG. 5F illustrates a front view of a rear surface of the front panel 440 and a front surface of the back panel 430 in FIG. 5A.

The following will explain various exemplary manipulations of the user terminal apparatus by referring to drawings. For conciseness, the following will assume that the layered panels are implemented to slide toward up, down, left and right directions, and the physical guide is implemented to be a projection in a crossed shape.

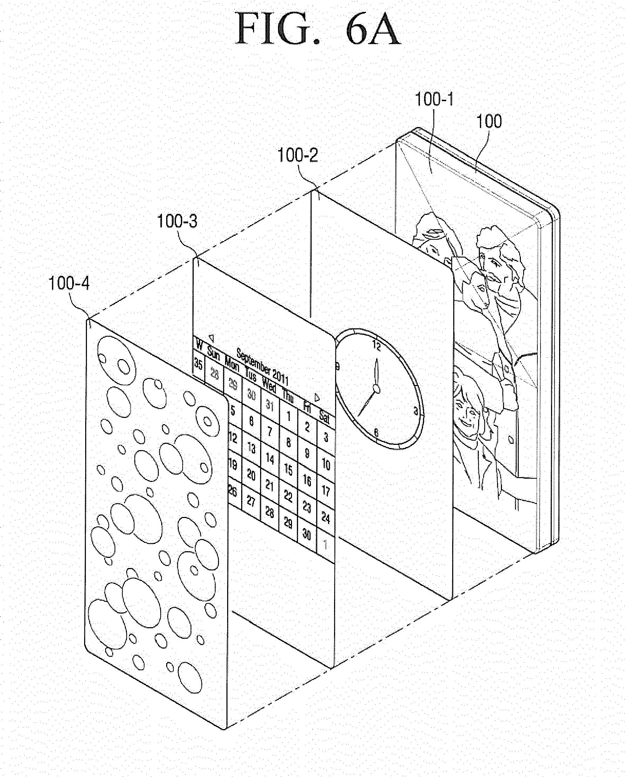

FIGs. 6A to 6D are diagrams illustrating operation of the user terminal apparatus according to aspects of exemplary embodiments.

As illustrated in FIG. 6A, the user terminal apparatus 100 may operate in a wallpaper mode that displays content, such as a widget, an idle application, a picture and an animation. Specifically, the user terminal apparatus 100 may provide widgets such as a clock 100-2 and a calendar 100-3, or content, such as a customized picture 100-1 or an image 100-4.

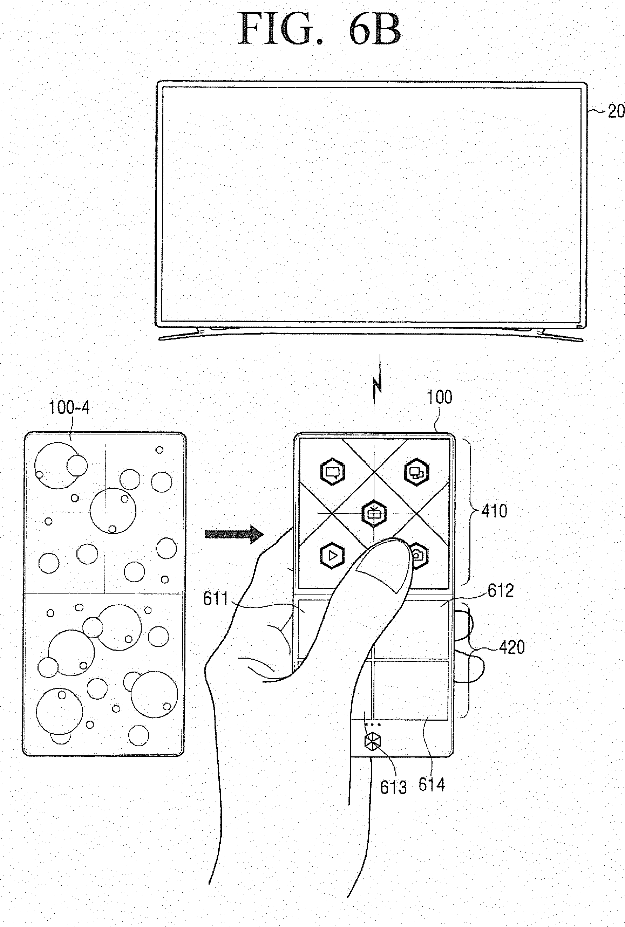

As illustrated in FIG. 6B, when a preset event, such as user gripping manipulation occurs, the user terminal apparatus 100 may switch from displaying the image 100-4 in the wallpaper mode to display an initial screen.

The initial screen may include the menu items displayed on the first area 410 and various pieces of information displayed on the second area 420.

The second area 420 may provide items, such as a previously viewed menu 611 to view the previously viewed content, a current broadcasting menu 612 to view currently broadcast content, a message menu 613 to provide new messages, and an input source menu 614 to provide various input sources. Herein, the menu displayed on the second area 420 may be a shortcut menu in which a corresponding menu is immediately implemented simultaneously with the electronic apparatus 200 being turned on in response to selection of a corresponding menu.

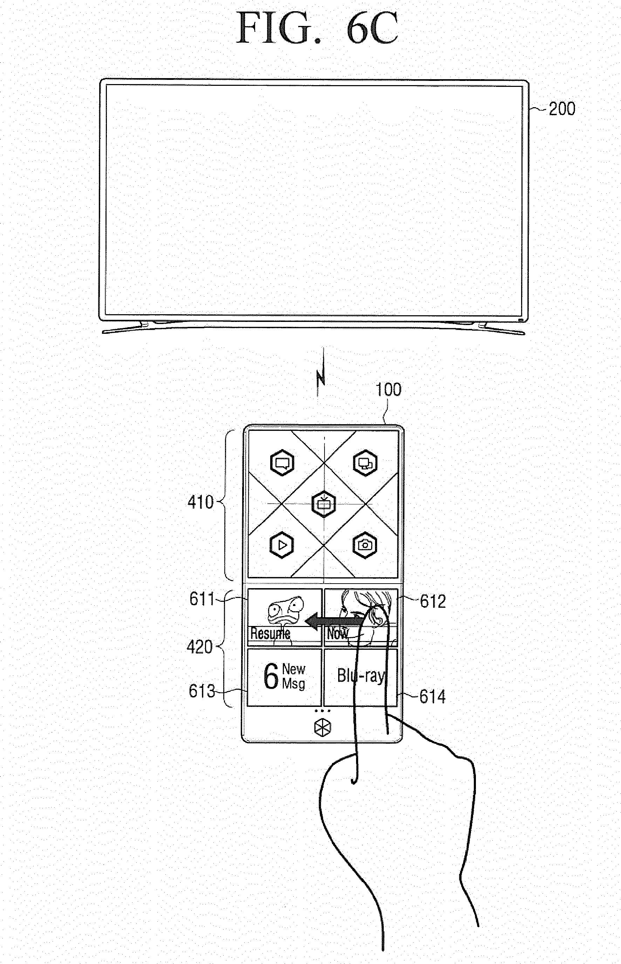

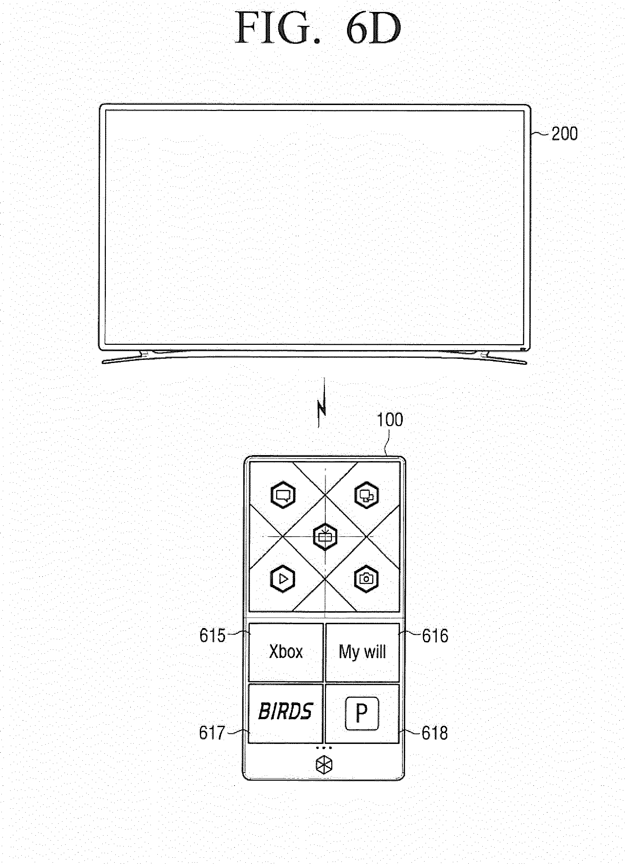

As illustrated in FIG. 6C, when a touch and flick manipulation is input, the second area 420 may provide menu items 611 to 614. For example, as illustrated in FIG. 6D, items 615 to 618 are displayed to indicate various applications that may be provided on a next page.

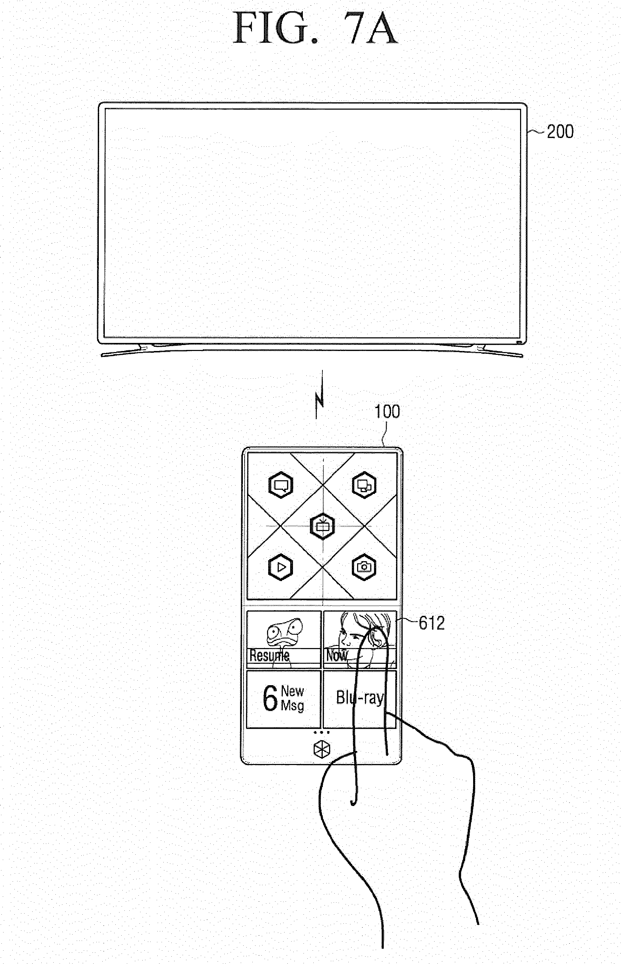

FIGs. 7A to 7D are diagrams illustrating operation of the user terminal apparatus according to aspects of exemplary embodiments.

As illustrated in FIG. 7A, according to an aspect of an exemplary embodiment, when the current broadcasting menu item 612 is selected, corresponding selecting signals may be transmitted from the user terminal apparatus 100 to the electronic apparatus 200, and the currently broadcast channel may be selected and displayed when the electronic apparatus 200 is turned on. According to an aspect of an exemplary embodiment, the currently broadcast channel may be one of a most recently selected channel by a user, a channel preset by a user regarding corresponding menu, and a favorite channel.

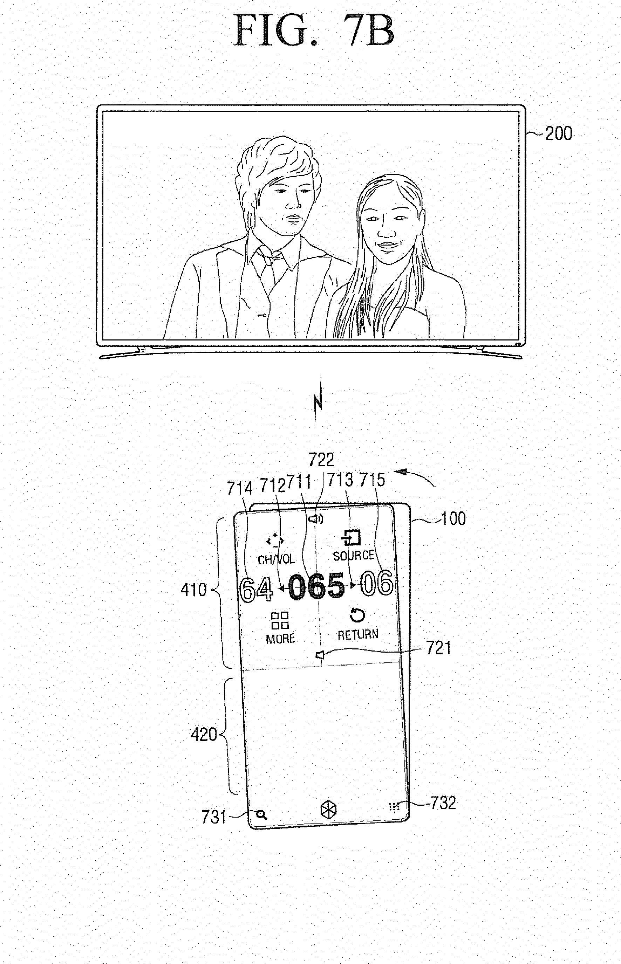

As illustrated in FIG. 7B, according to an aspect of an exemplary embodiment, the first area 410 of the user terminal apparatus 100 may provide a UI for channel selection. For example, the UI may provide the current channel number 711 and directional GUI 712, 713 to select previous and next channels by movement in the horizontal direction. Herein, some of the previous and next channel numbers 714, 715 may be displayed, and a corresponding channel number may be marked to be distinguished from the current channel number 711. For example, the current channel number 711 may be highlighted, and the previous and next channel numbers 714, 715 may be displayed without a highlight.

Further, the user terminal apparatus 100 may provide UI 721, 722 for volume adjusting in the vertical direction. Herein, UI 721, 722 for volume adjusting may include GUI 721 to indicate a mute status, and GUI 722 to indicate a maximum volume status, and may be displayed vertically in the first area 410.

Meanwhile, when a UI to control a specific mode of the electronic apparatus 200 is provided on the first area 410, the information displayed on the second area 420 may close, and the second area 420 may not display any information. However, it may not be limited to the above.

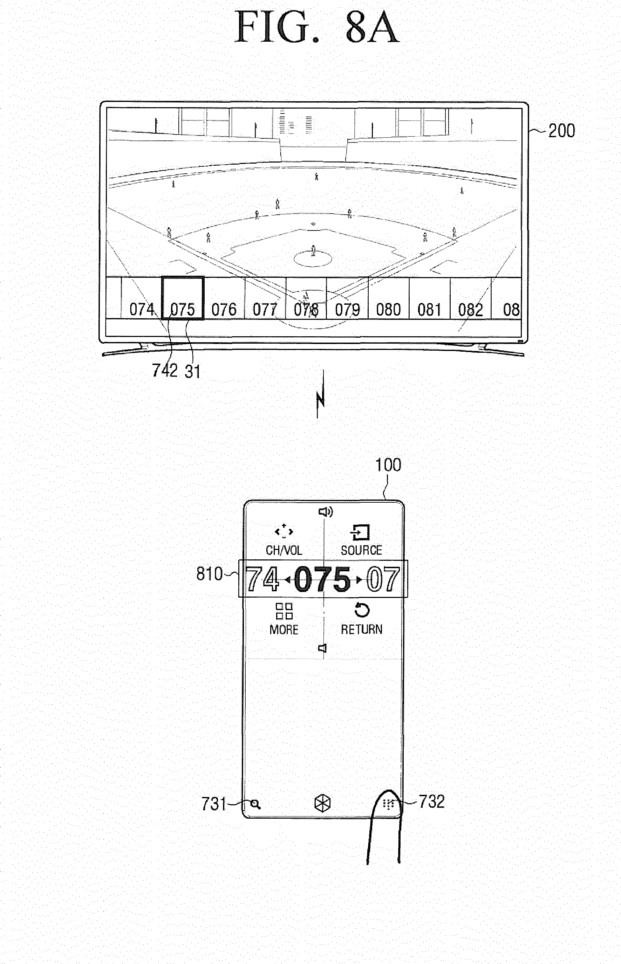

Further, as illustrated in FIG. 7B, the second area 420 may provide menu item 731 for searching and menu item 732 for providing a UI to input characters. Herein, the menu item 731 for searching may be a menu item to perform the searching in the user terminal apparatus 100 or the display apparatus 200. When menu item 731 is selected, the user terminal apparatus 100 may provide a UI for searching and inputting characters, or the electronic apparatus 200 may provide the searching window while the user terminal apparatus 100 may provide UI for inputting characters. The menu item 732 to provide the UI for inputting characters will be explained with reference to FIG. 8A.

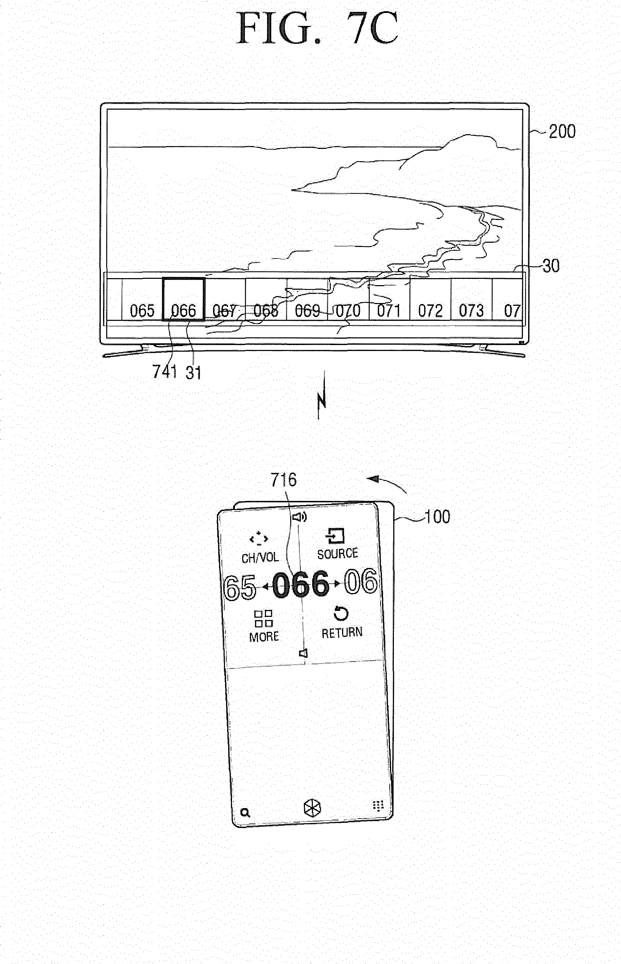

Further, as illustrated in FIG. 7B, when a sliding interaction toward the left direction is input to the user terminal apparatus 100, the current channel number 711 on UI displayed on the user terminal apparatus 100 may be modified to include a next channel number 716 selected in response to selecting of the directional GUI 613, and the next channel number 716 may be displayed, as illustrated in FIG. 7C.

Further, while the electronic apparatus 200 may provide broadcasting content of the selected next channel in response to selecting the directional GUI 713, channel list 30 may be provided on the lower of the screen. According to an aspect of an exemplary embodiment, the channel list 30 may be provided in a block form in which a GUI 741 including consecutively arranged channel information can be provided on the bottom of the screen. However, the GUI may not be limited to the above.

Meanwhile, in the GUI 741, may include a select GUI 31 to indicate the currently selected channel on the channel list 30. The select GUI 31, such as a cursor or a highlight, may be displayed so that the currently selected channel can be distinguished and marked from the other channels.

Further, as illustrated in FIG. 7C, when a sliding interaction status toward the left direction is maintained, channel changing may be performed to correspond to the time of the sliding interaction in the electronic apparatus 200. According to an aspect of an exemplary embodiment, a block shape of the GUI including channel information provided on the screen of the electronic apparatus 200 may move toward a direction corresponding to the interaction direction on the user terminal apparatus 100. Further, when the user terminal apparatus 100 returns to the original state, the GUI 31 may stop being displayed.

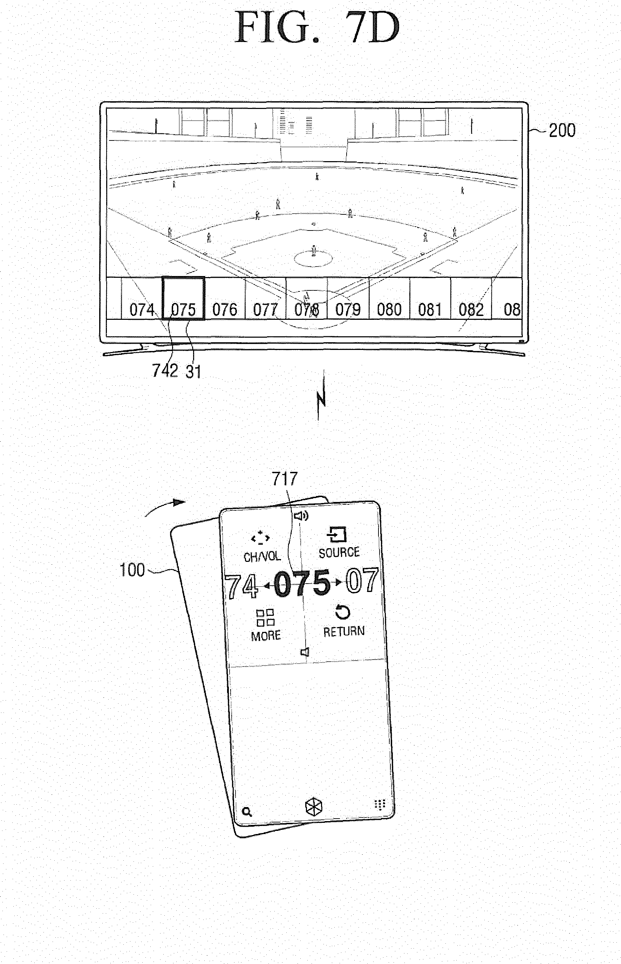

For example, channel scrolling may be performed during a maintained time of the sliding interaction status in the user terminal apparatus 100 while channel 66 is selected, as illustrated in FIG. 7C. Corresponding channel 75 may be selected at the time of returning to the original status, as illustrated in FIG. 7D. According to an aspect of an exemplary embodiment, a block shape of the GUI including channel information may move correspondingly to a scrolling velocity, and stop being displayed when the scrolling stops on a UI provided on the second physical guide area 20 of the user terminal apparatus 100,.

FIGs. 8A to 8D are diagrams illustrating operation of the user terminal apparatus according to aspects of exemplary embodiments.

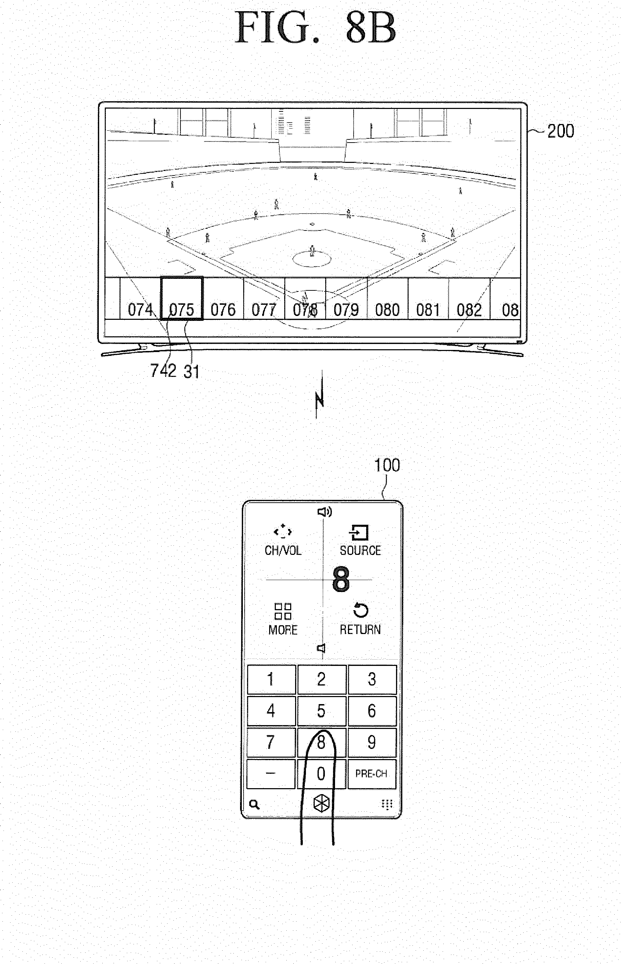

As illustrated in FIGs. 8A and 8B, when the menu item 732 to provide a UI for character inputting is selected while UI 810 for channel changing is displayed, UI 820 for character inputting may be provided on the lower area of the user terminal apparatus 100. According to an aspect of an exemplary embodiment, UI 820 for character inputting may be provided for number inputting according to a status of the display apparatus 200. For example, as illustrated in FIG. 8B, when the electronic apparatus 200 is operating to select the channel, the UI for number inputting may be provided.

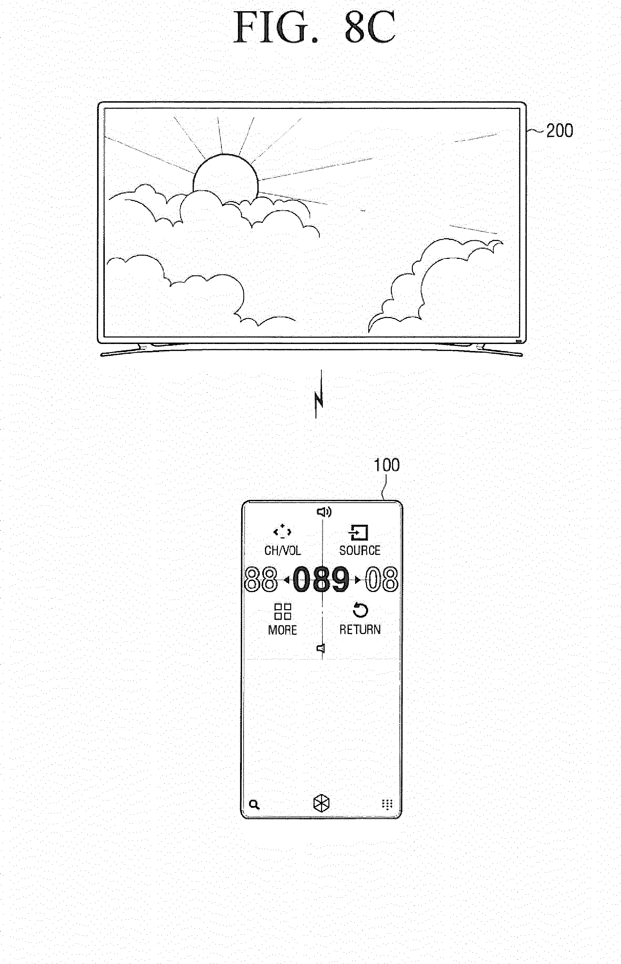

Further, as illustrated in FIGs. 8B and 8C, when the number "8" and the number "9" are consecutively selected, the numbers "8" and "9" may be consecutively input and displayed on the area where UI for channel selection is displayed.

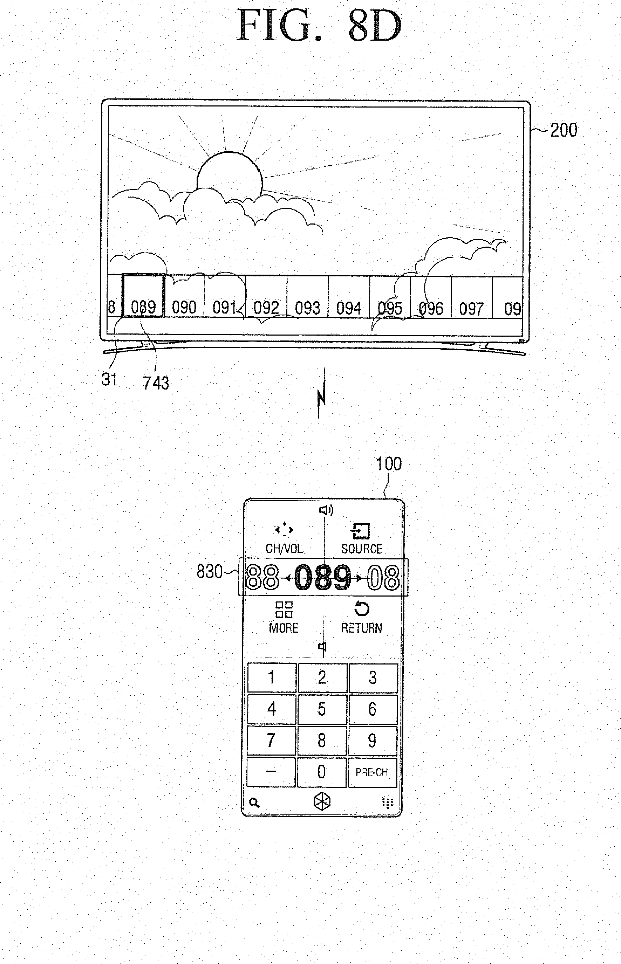

Next, as illustrated in FIG. 8D, UI 830 for channel selection may be displayed on the user terminal apparatus 100 and channel 89 may be selected and displayed on the electronic apparatus 200. According to an aspect of an exemplary embodiment, the cursor 31 may be moved and marked on the block GUI 743 indicating channel 89 on the channel list 30 provided on the lower of the screen in the electronic apparatus 200.

Meanwhile, in response to a preset event occurring after channel 89 is selected, the channel list 30 provided on the lower of the screen in the electronic apparatus 200 may close on the screen. Herein, the preset event may be an event in which a preset time passes after a channel is selected or an event in which a preset button (e.g., confirm button or exit button) is input after a channel is selected.

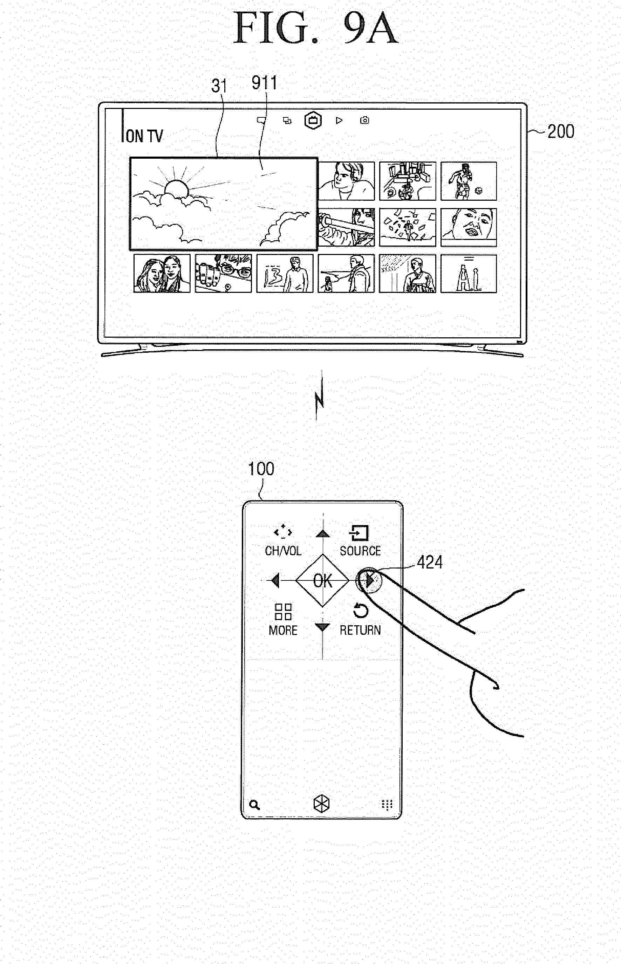

FIGs. 9A to 9G are diagrams illustrating operation of the user terminal apparatus according to aspects of exemplary embodiments.

FIG. 9A illustrates a situation in which specific content 911 is selected with the cursor 31 on the displayed UI screen.

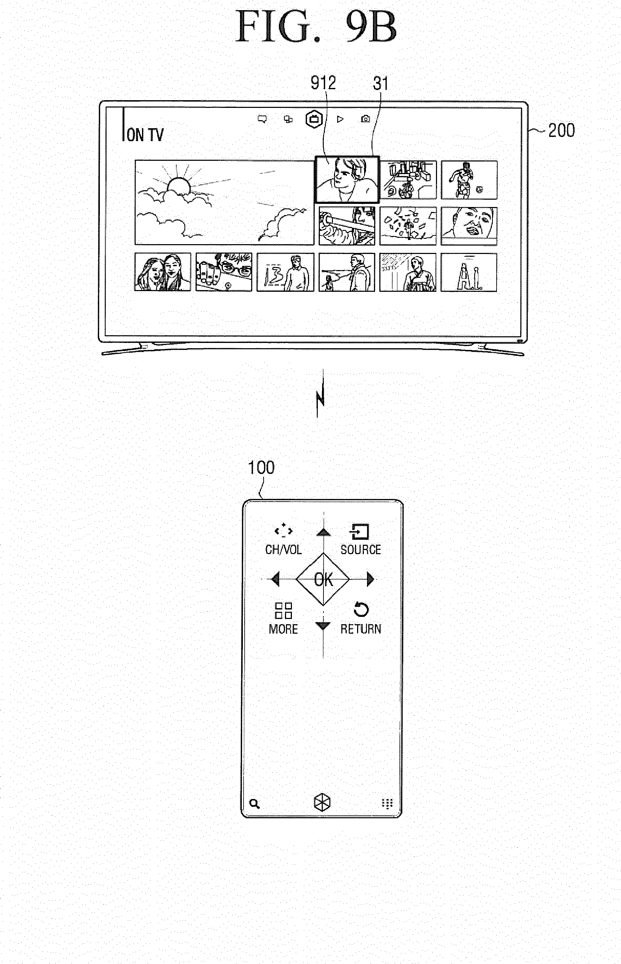

As illustrated in FIGs. 9A and 9B, when performing the manipulation to push the right directional button 424 provided on the user terminal apparatus 100, the selecting GUI 31 may be moved and arranged on the next content 912.

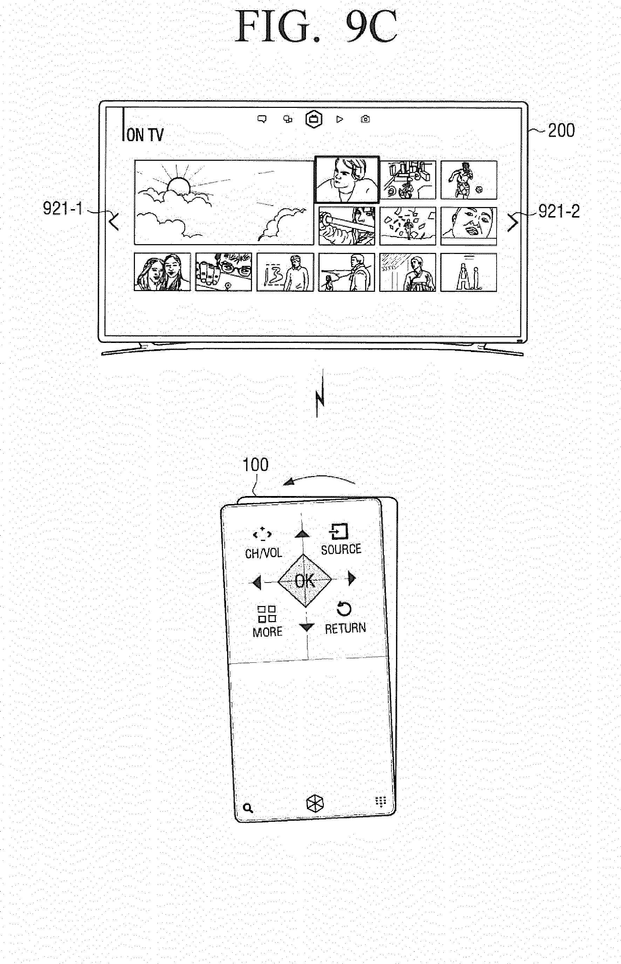

As illustrated in FIG. 9C, when a sliding interaction is input toward the left direction of the user terminal apparatus 100, the electronic apparatus 200 may display a guiding GUI 921-1, 921-2 to guide movement of UI pages on the displayed UI screen. The left directional guiding GUI 921-1 may guide a new UI page from the left direction, and the right directional guiding GUI 921-2 may guide a new UI page from the right direction.

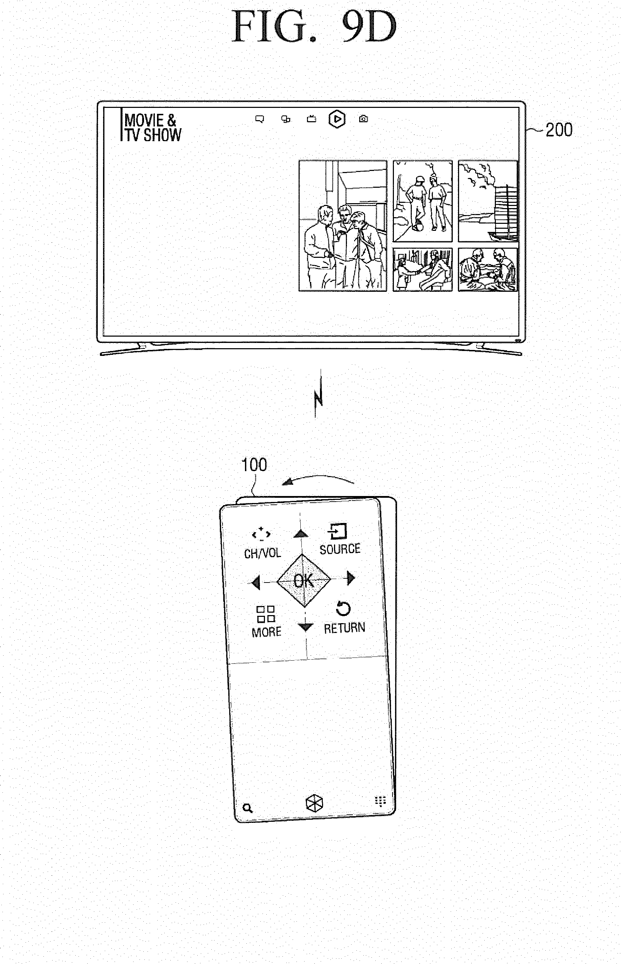

As illustrated in FIG. 9D, when the UI page is moved toward the left direction, a new UI page arranged on the right direction may be displayed, and may gradually move toward the left side. The guiding GUI may close on the screen while pages are moved. However, it may not be limited to the above.

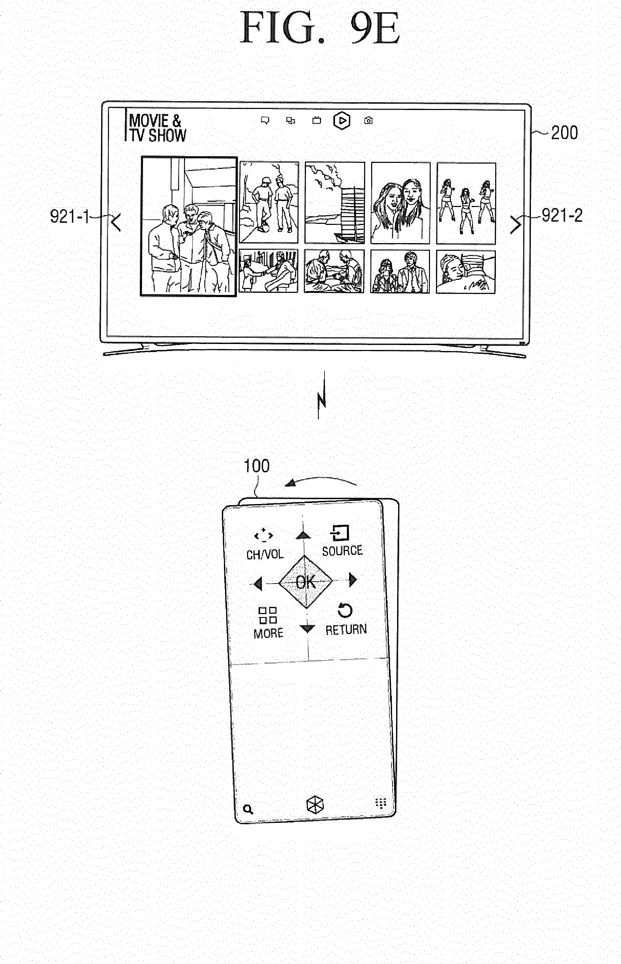

Thereafter, as illustrated in FIG. 9E, when page converting is performed, the guiding GUI 921-1, 921-2 to guide the moving of UI pages may be displayed again.

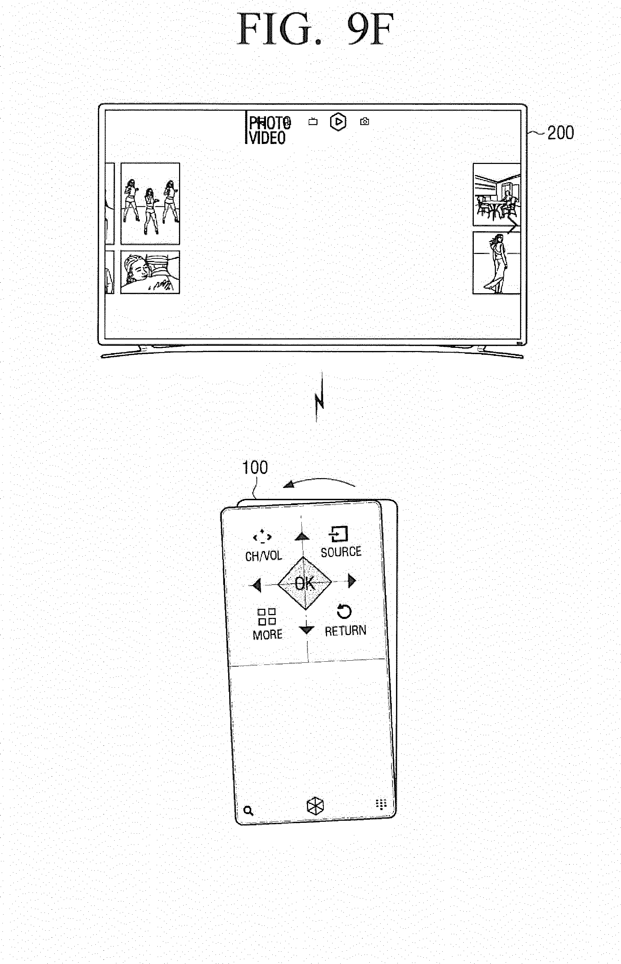

Further, as illustrated in FIG. 9F, when the left directional sliding interaction is maintained, UI page converting may be continued to be performed.

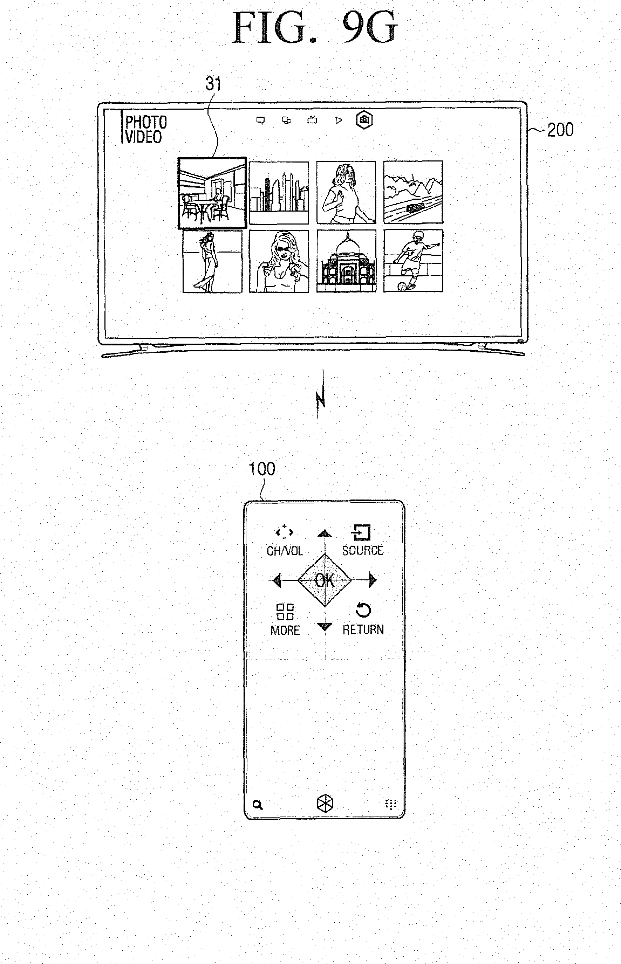

Next, as illustrated in FIG. 9G, when the user terminal apparatus 100 returns to the original status, the selecting GUI 31 may be displayed on the first content on the displayed UI page.

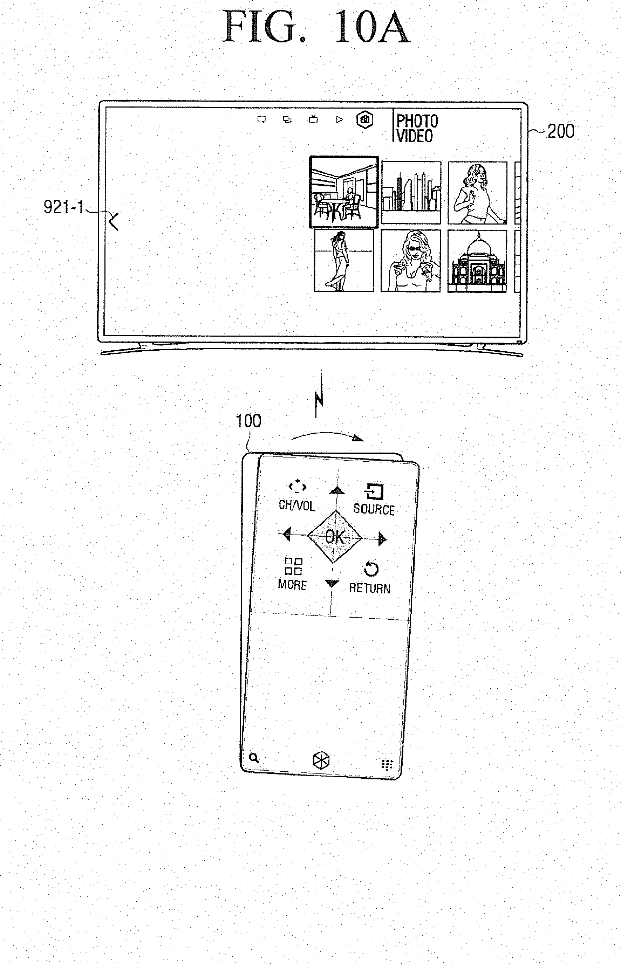

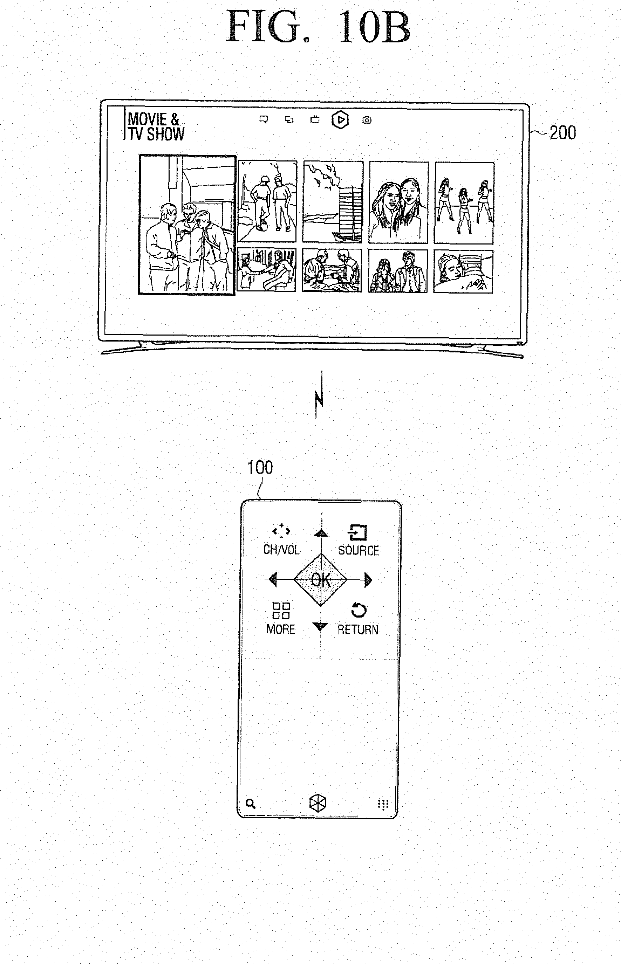

FIGs. 10A and 10B are diagrams illustrating operation of the user terminal apparatus according to an aspect of an exemplary embodiment.

As illustrated in FIG. 10A, when a right directional sliding interaction is input on the user terminal apparatus 100 in the situation illustrated in FIG. 9G, a UI page may be moved toward the right direction, and a new UI page from the left direction may be displayed. According to an aspect of an exemplary embodiment, the guiding GUI 921-1 to guide the left directional moving may be displayed, as illustrated in FIG. 10A.

Next, as illustrated in FIG. 10B, when the user terminal apparatus 100 returns to the original status, a content on the displayed UI page may be selected.

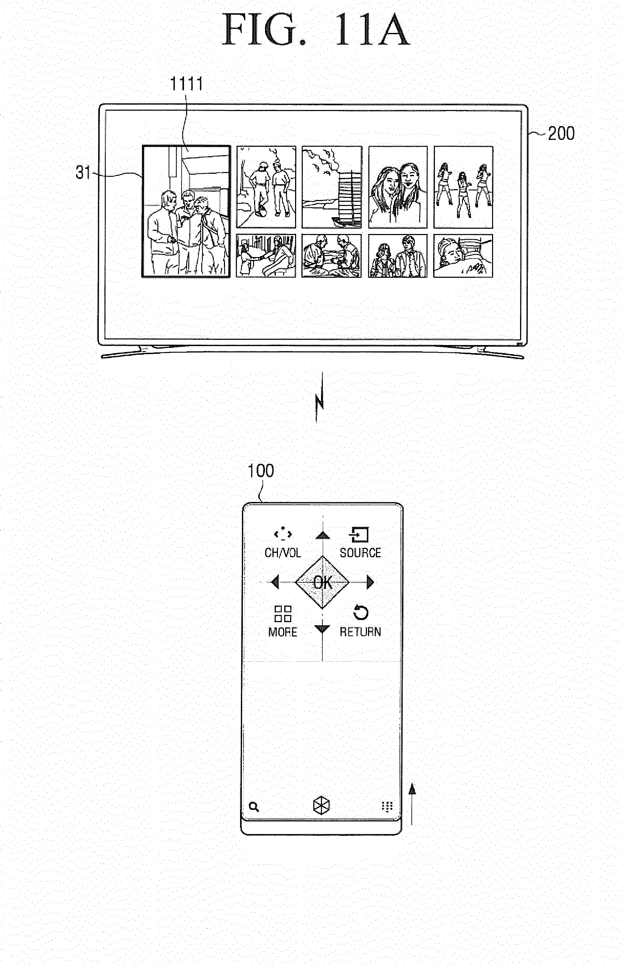

FIGs. 11A to 11D are diagrams illustrating operation of the user terminal apparatus according to another aspect of an exemplary embodiment.

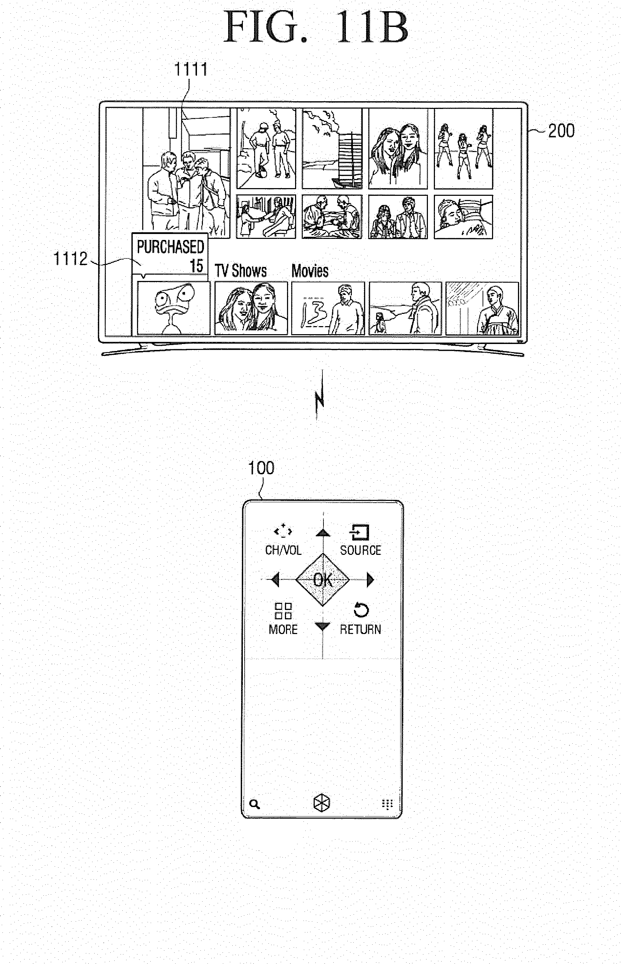

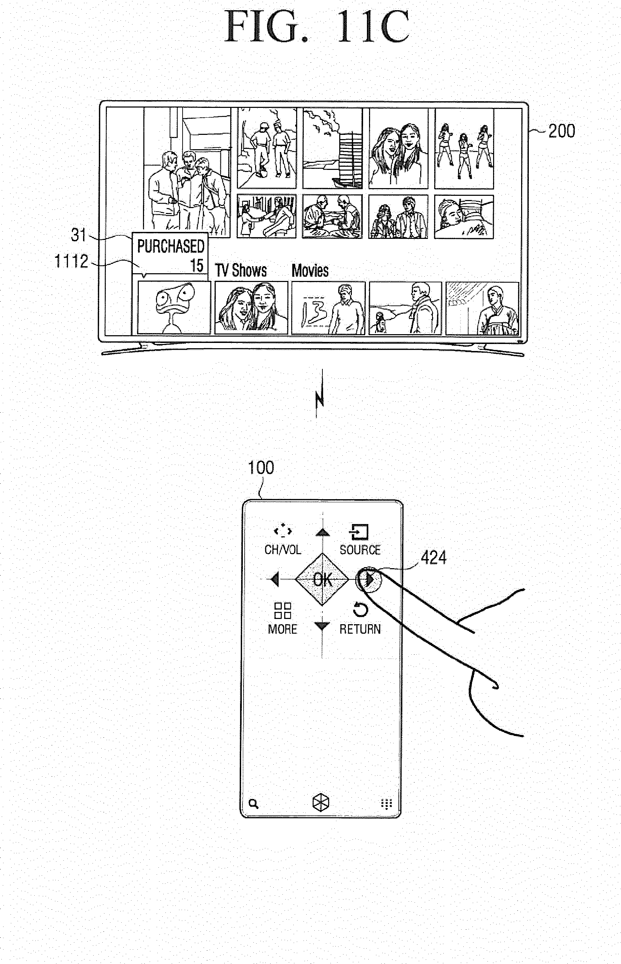

As illustrated in FIGs. 11A and 11B, when an up directional sliding interaction is input on the user terminal apparatus 100, a new UI page coming from the downward direction may be gradually shown and displayed while the UI page may gradually move toward the upper portion of the electronic device 200, as illustrated in FIG. 11B. According to an aspect of an exemplary embodiment illustrated in FIG. 11C, the selecting GUI 31 may be kept on the screen. Thereby, the selecting GUI 31 may be moved to indicate newly displayed content 1112.

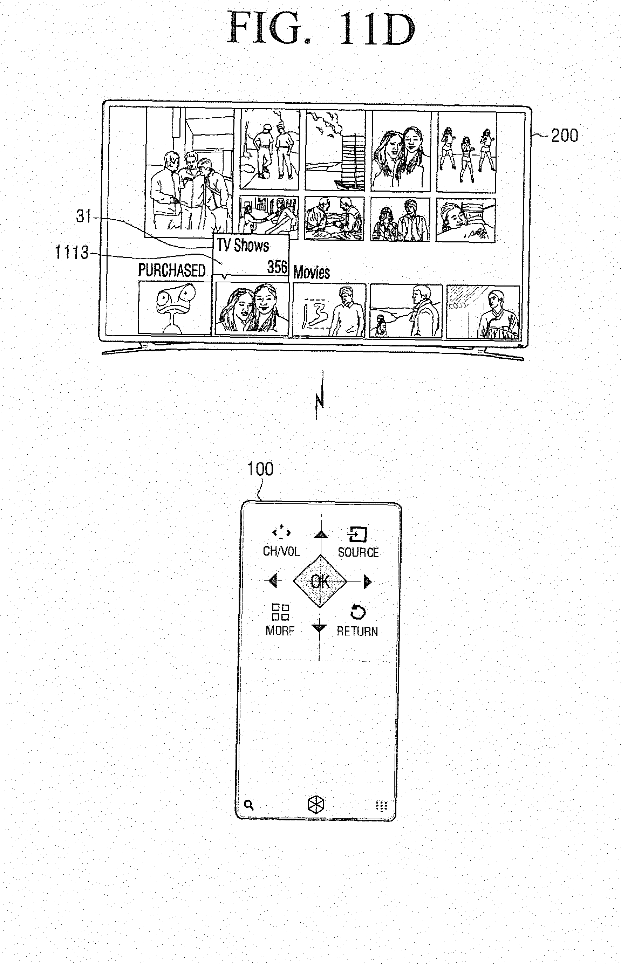

Thereafter, as illustrated in FIGs. 11C and 11D, when a touch manipulation is performed on the right directional button 424, the selecting GUI 31 may be moved to indicate content 1113.

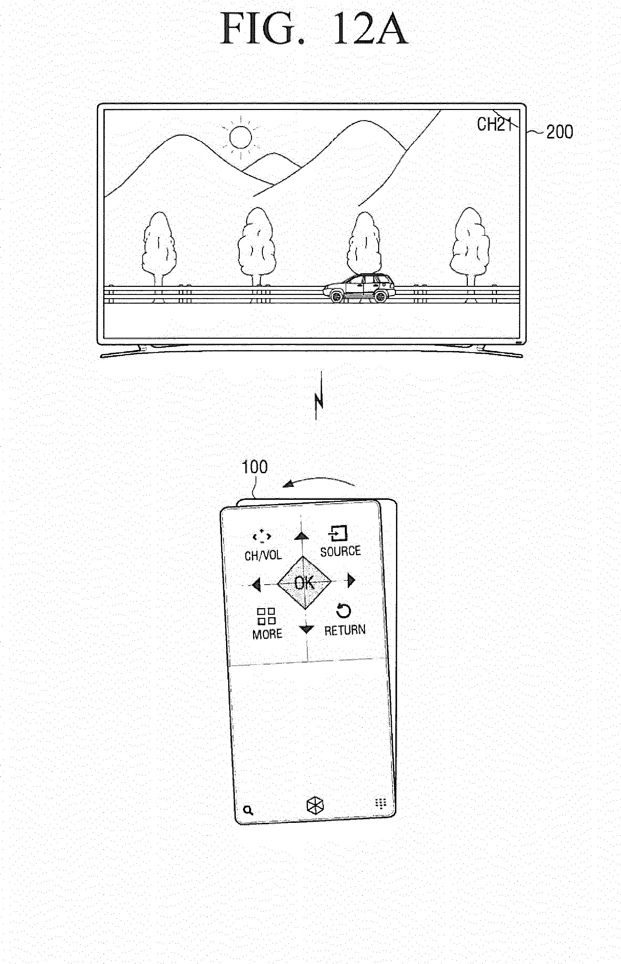

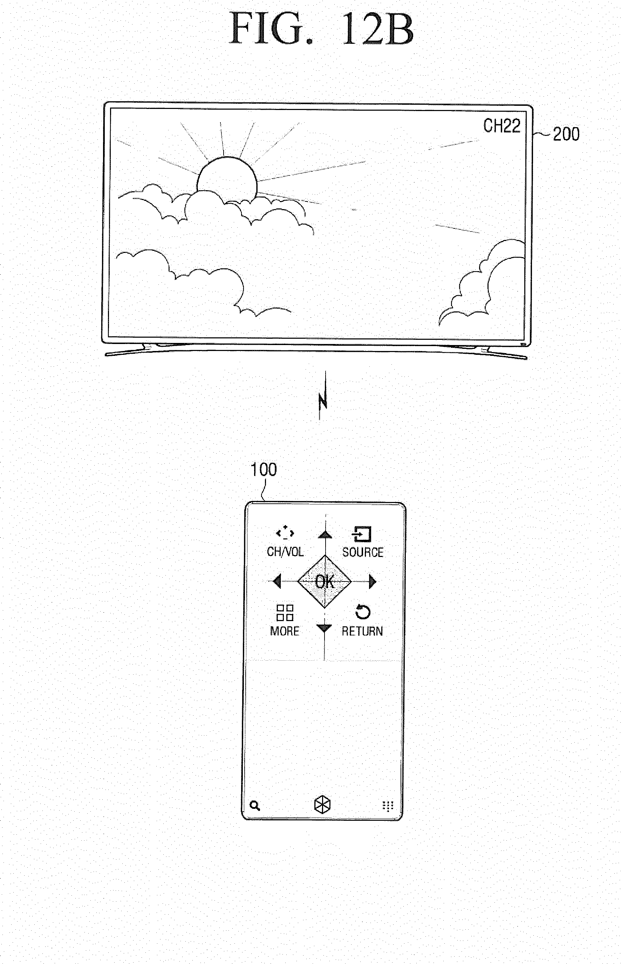

FIGs. 12A and 12B are diagrams illustrating operation of the user terminal apparatus 100 according to an exemplary embodiment.

As illustrated in FIGs. 12A and 12B, while a preset channel (e.g., channel 21) is selected and displayed on the electronic apparatus 200, a next channel (e.g., channel 22) may be selected and displayed in response to a sliding interaction of the user terminal apparatus 100 sliding toward the left direction. The left directional sliding interaction may be maintained until the user terminal apparatus 100 returns to the original status, thereby continuing channel selection.

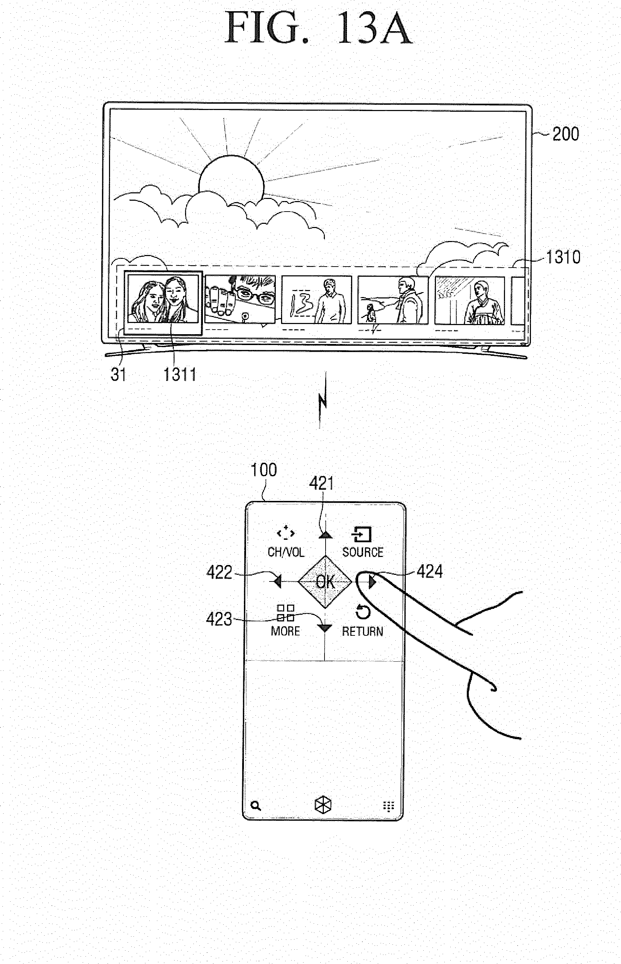

FIGs. 13A to 13C are diagrams illustrating operation of the user terminal apparatus 100 according to another exemplary embodiment.

As illustrated in FIG. 13A, a recommend content list 1310 may be provided on the lower portion of the screen in the electronic apparatus 200 according to a preset event. The recommend content list 1310 may be provided in a form in which a block shape of GUI includes content information arranged in a series. However, it may not be limited to the above.

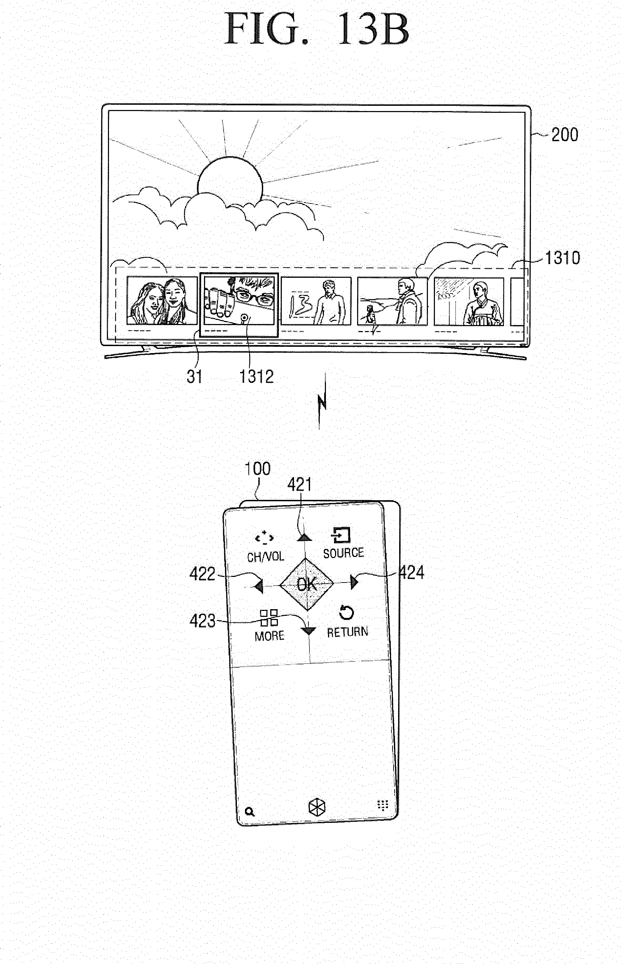

The selecting GUI 31 may be moved toward the next content and displayed in response to a user manipulation pushing one of the directional buttons 421 to 424 provided on the user terminal apparatus 100. For example, as illustrated in FIGs. 13A and 13B, the selecting GUI 31, positioned on the first block GUI 1311, may be moved toward the next block GUI 1312 and displayed in response to a user manipulation pushing the right directional button 424.

Thereafter, as illustrated in FIG. 13B, the recommend content list 1310 may be modified and provided in response to the sliding interaction regarding the user terminal apparatus 100.

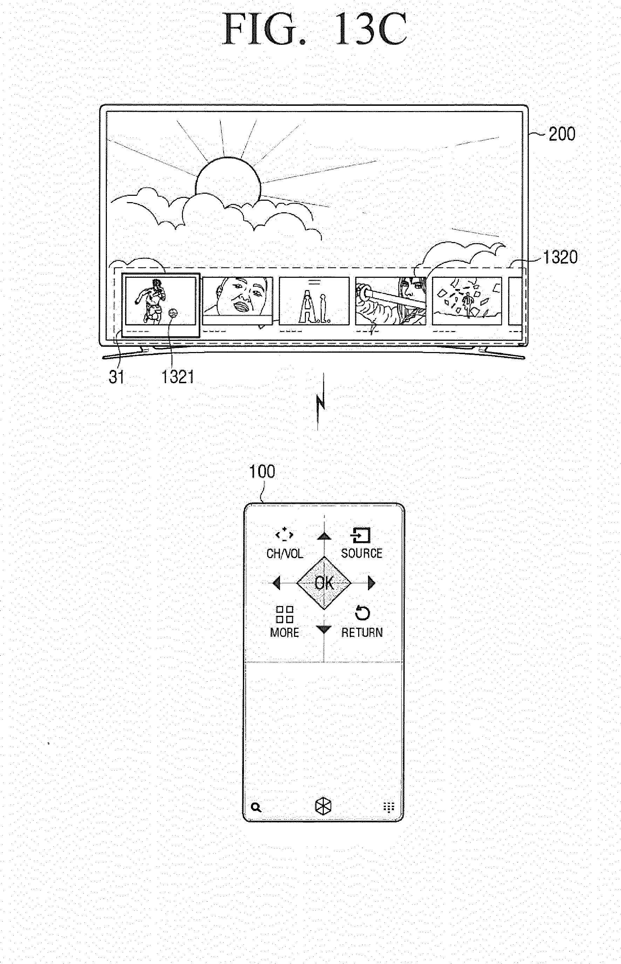

As shown in FIGs. 13B and 13C, for example, the current content list 1310, which is not provided on the screen, may be moved toward the left direction, and the next content list 1320, including selected content item 1321, may be provided from the right direction in response to a left directional sliding interaction as illustrated in FIG. 13B.

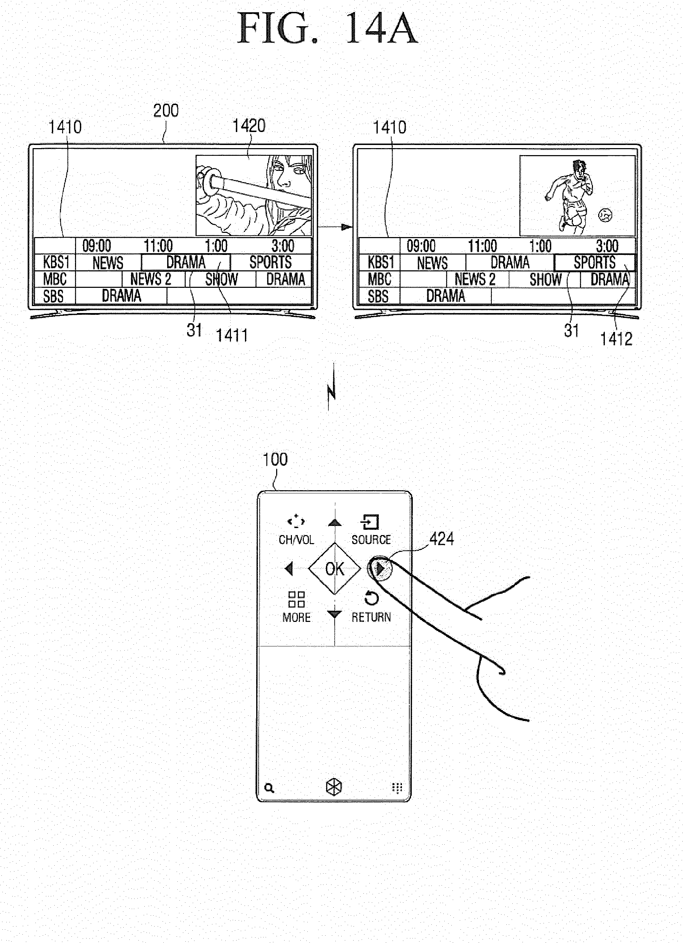

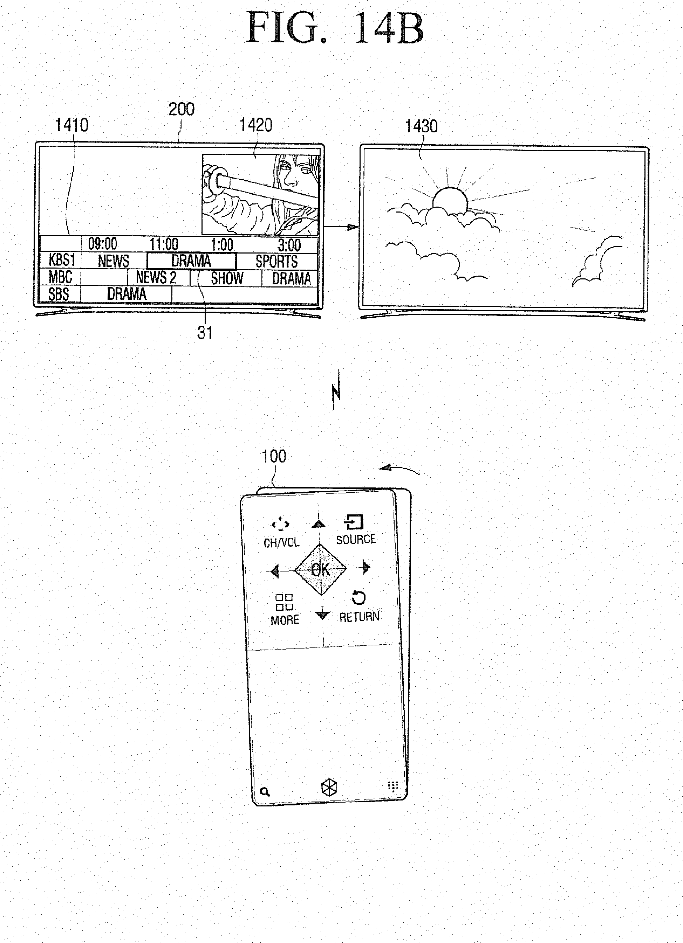

FIGs. 14A and 14B are diagrams illustrating operation of the user terminal apparatus 100 according to another exemplary embodiment.

FIG. 14A illustrates a channel schedule table 1410 that may be displayed on the main screen of the electronic apparatus 200. The selecting GUI 31 is positioned on a specific content item 1411 on the channel schedule table 1410, and a broadcasting channel corresponding to the selected content item from the channel schedule table 1410 is selected and displayed on the sub screen 1420. When a touch manipulation is performed on the right directional button 424 of the user terminal apparatus 100, the selecting GUI 31 may be modified into a position of a next content item 1412 and displayed on the channel schedule table 1410, as illustrated in FIG. 14A.

As illustrated in FIG. 14B, when a left directional sliding interaction is input on the user terminal apparatus 100, a next broadcasting channel may be selected and displayed on an entire area of the screen.

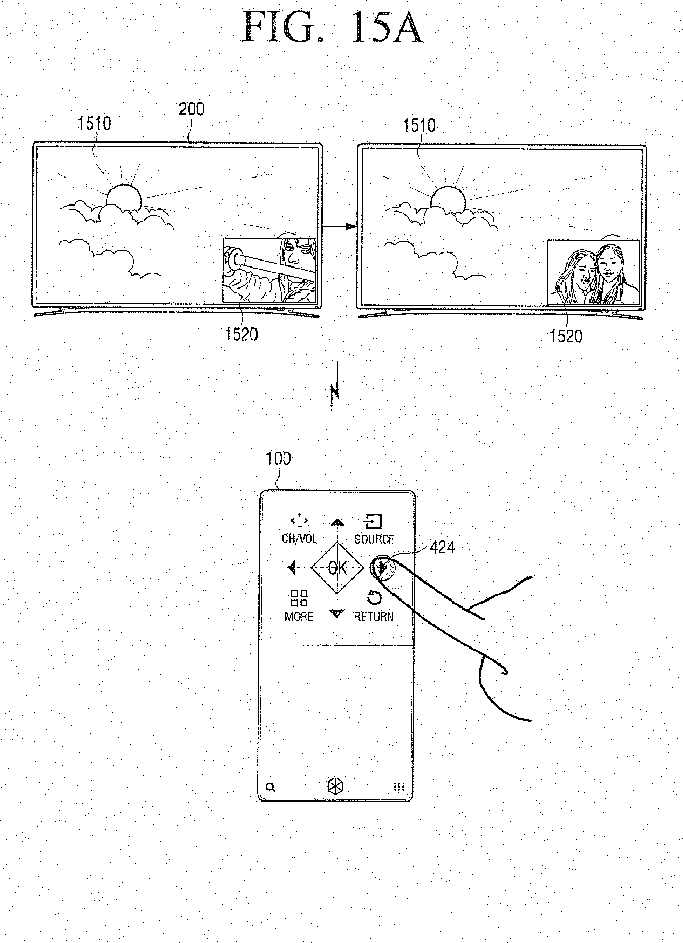

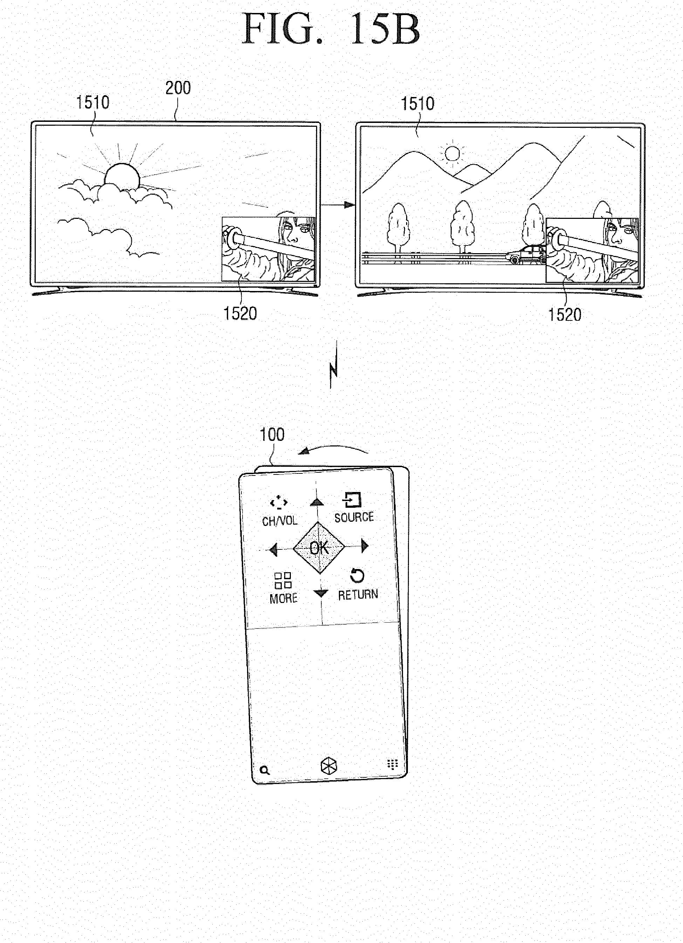

FIGs. 15A and 15B are diagrams illustrating operation of the user terminal apparatus 100 according to another exemplary embodiment.

As illustrated in FIG. 15A, different channels may be selected and displayed on the main screen 1510 and the sub screen 1520 of the screen of the electronic apparatus 200. When a touch manipulation is performed on the right directional button 424 of the user terminal apparatus 100, a next channel may be selected and displayed on the sub screen 1520.

Meanwhile, as illustrated in FIG. 15B, when a left directional sliding interaction is input on the user terminal apparatus 100, a next channel may be selected and displayed on the main screen 1510.

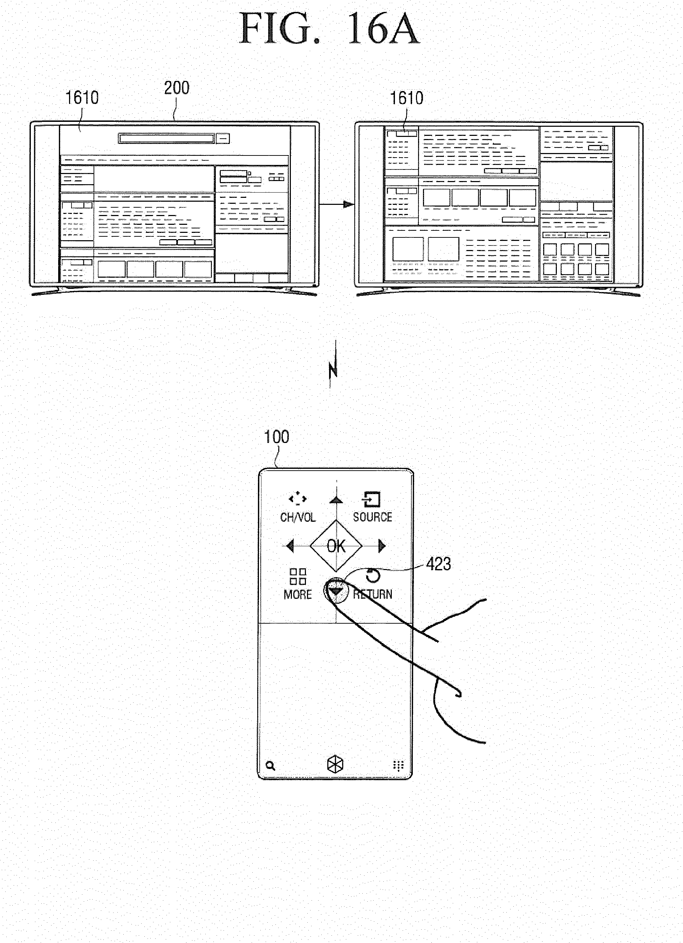

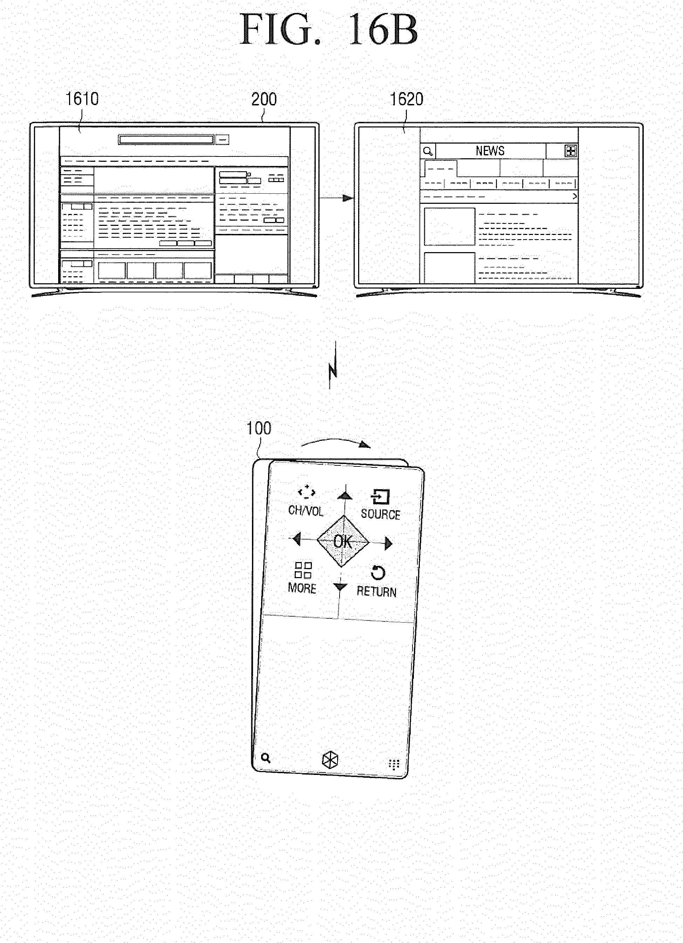

FIGs. 16A and 16B are diagrams illustrating operation of the user terminal apparatus according to another exemplary embodiment.

As illustrated in FIG. 16A, a web page 1610 may be provided on the screen of the electronic apparatus 200. When a push manipulation is performed on the lower directional button 423, a scrolling function may be performed on the web page 1610.

Meanwhile, as illustrated in FIG. 16B, when a right directional sliding interaction is input on the user terminal apparatus 100, a different web page 1620 from the currently displayed web page may be displayed. Herein, the different web 1620 page may be any one of various formats, such as a web page corresponding to the detailed screen shown by the item selected on the currently displayed web page and another web page having the same level.

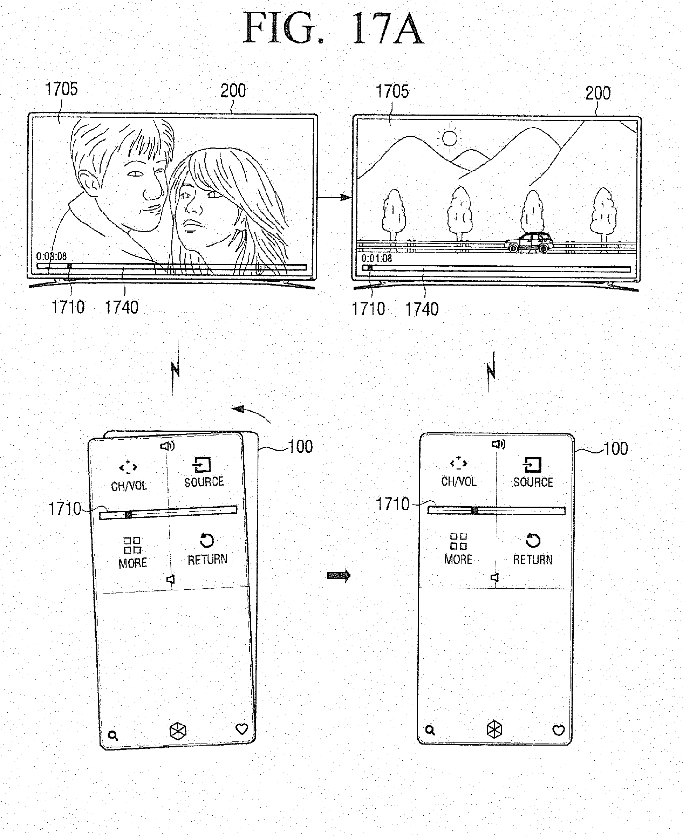

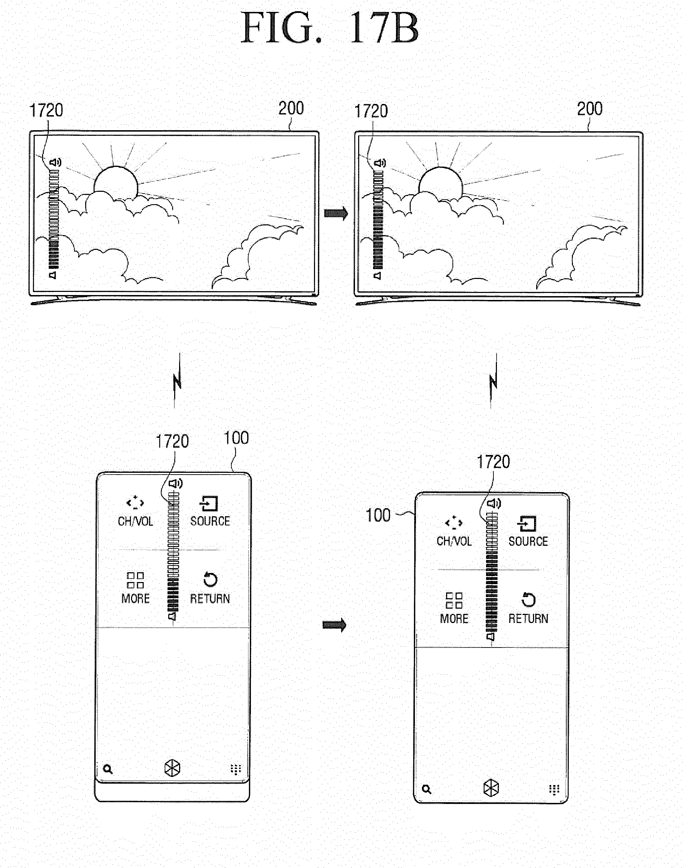

FIGs. 17A and 17B are diagrams illustrating operation of the user terminal apparatus according to another exemplary embodiment.

As illustrated in FIG. 17A, while navigable content 1705, such as VOD content, is played back on the electronic apparatus 200, when a left directional sliding interaction is input on the user terminal apparatus 100, a reproduction point of the content may be modified. Specifically, as illustrated, a reproduction point 1750 on the progress bar 1710 indicating reproducing status of the content provided on the electronic apparatus 200 may be modified, and the content at the corresponding time may be played back.

Further, the user terminal apparatus 100 may provide a UI screen including the progress bar 1710 indicating reproducing time of the content, and a corresponding UI screen may be also modified and provided in response to a sliding interaction.

As illustrated in FIG. 17B, when an up directional sliding interaction is input on the user terminal apparatus 100 while the electronic apparatus 200 provides content, a volume status of the electronic apparatus 200 may be controlled. Specifically, as illustrated, a display status of a volume GUI 1720 indicating the volume status provided on the electronic apparatus 200 can be modified and the volume status can be modified.

Further, the user terminal apparatus 100 may provide a UI screen including the volume GUI 1720 indicating volume adjusting status, and a corresponding UI may be also modified and provided in response to a sliding interaction.

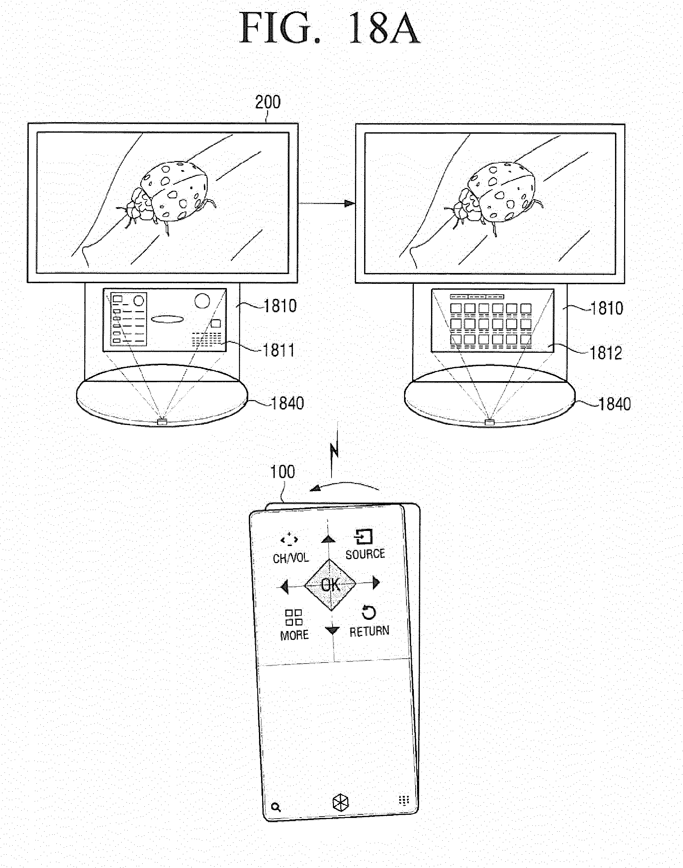

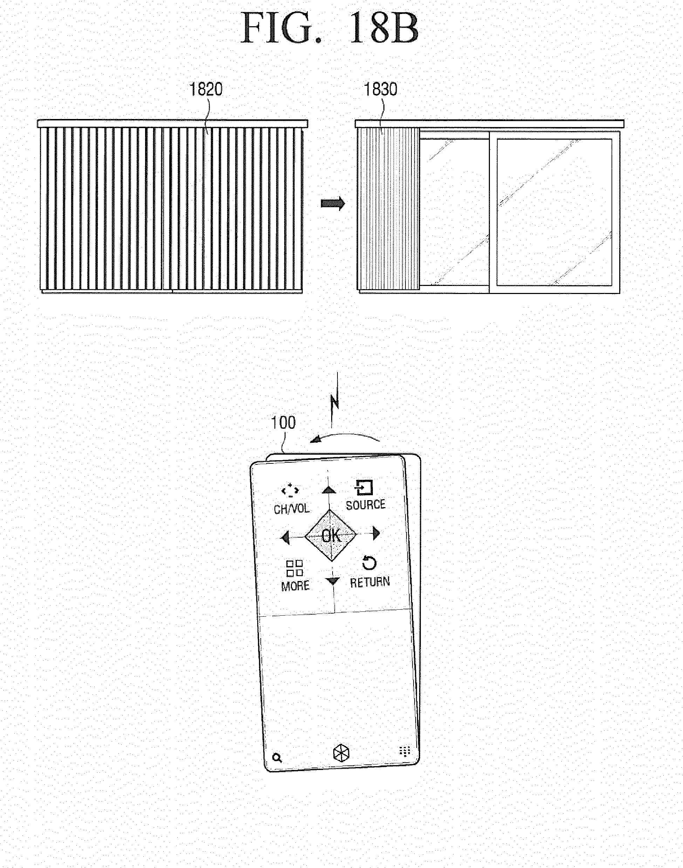

FIGs. 18A and 18B are diagrams illustrating operation of the user terminal apparatus according to another exemplary embodiment.

As illustrated in FIG. 18A, a sliding interaction of the user terminal apparatus 100 may control a display status of a video provided by another electronic apparatus 1840, such as a video projector. When the sliding interaction is performed toward the left direction on the user terminal apparatus 100 while the projection video 1811 is projected onto a preset outer area 1810 of the electronic apparatus 200, the projection video 1811 provided on corresponding area 1810 may be modified into a next page video 1812 and provided.

As illustrated in FIG. 18B, another device, such as curtain, can be controlled through a sliding interaction of the user terminal apparatus 100. When a sliding interaction is performed toward the left direction on the user terminal apparatus 100 while the curtain 1820 is closed, the curtain 1820 may open toward corresponding direction to the sliding direction.

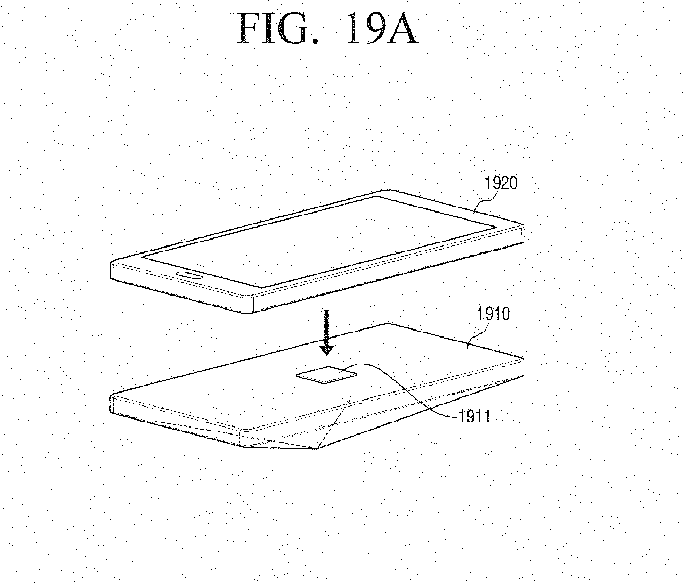

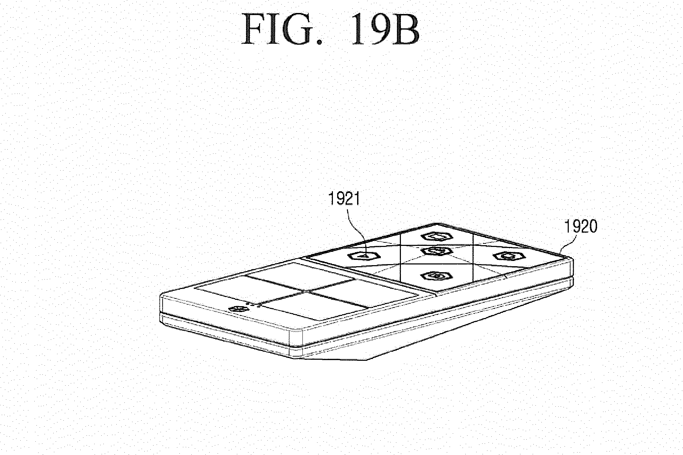

FIGs. 19A and 19B are diagrams illustrating a function of the support according to another exemplary embodiment.

As illustrated in FIG. 19A, a support 1910 according to an exemplary embodiment includes an NFC tag 1911, and is able to attach to another user terminal apparatus 1920. As shown in FIG. 19B, the support may be implemented to automatically activate the remote controlling function.

Thus, the remote controlling function may be activated by transmitting a software module for the remote controlling function stored in the NFC tag provided with the support 1910, and automatically activate the software module. According to an aspect of an exemplary embodiment, as illustrated in FIG. 19B, an initial UI screen 1921 may be provided for the remote controlling function.

Thereby, the remote controlling function can be automatically activated with the simple method in which a loading process is completed whenever the remote controller application is downloaded and implemented.

Meanwhile, a UI providing method according to an exemplary embodiment may be implemented by the application directly utilized by a user on an O/S. Further, the application can be provided in an icon interface form on the user terminal apparatus 100 or the screen of the electronic apparatus 200. However, it may not be limited to the above.

According to the exemplary embodiments explained above, user convenience can be enhanced because user requesting commands can be input by utilizing movements of the panels without viewing the screen at every motion.

Meanwhile, the control method of the user terminal apparatus according to the various exemplary embodiments may be implemented as program codes that can run in a computer, and provided to each server or device so that the program codes of the control method can be implemented by the processor while being stored in a non-transitory computer readable recording medium.

For example, the user terminal apparatus may be provided with a non-transitory computer readable recording medium storing the program transmitting signals corresponding to the input sliding interaction through the layered panels that may physically slide to an external device.

Non-transitory computer readable recording medium indicates a medium that store data semi-permanently and can be read by devices. Specifically, the above various applications or programs may be stored and provided in non-transitory computer readable recording medium such as CD, DVD, hard disk, Blu-ray disk, USB, memory card, ROM, or the like.

Further, the foregoing exemplary embodiments and advantages are merely exemplary and are not to be construed as limiting the exemplary embodiments. The present teaching can be readily applied to other types of apparatuses. Also, the description of the exemplary embodiments of the present inventive concept is intended to be illustrative, and not to limit the scope of the claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A user terminal apparatus (100), comprising:
a user interface (120) configured to generate a sliding interaction status based on a sliding interaction of layered panels that can perform physical sliding; and
a controller (140) configured to transmit signals corresponding to the sliding interaction status to an external device (200),
wherein the signals corresponding to the sliding interaction status are control signals corresponding to one or more functions based on a context of the external device.

2. The user terminal apparatus (100) of claim 1, wherein the context of the external device (200) comprises at least one of a content type displayed on the external device, a function provided from the external device, and a display status of the external device.

3. The user terminal apparatus (100) of claim 1 or 2, wherein the sliding interaction status comprises at least one of a sliding direction, a sliding degree, a sliding time and a sliding velocity.

4. The user terminal apparatus (100) of claim 3, wherein the signals corresponding to the sliding interaction status are signals configured to provide, on a screen of the external device, sliding animation effects corresponding to a display status of the external device (200) based on at least one of the sliding direction, the sliding degree, the sliding time and the sliding velocity.

5. The user terminal apparatus (100) according to anyone of claims 1 to 4, wherein the signals corresponding to the sliding interaction status are signals to provide, on a screen of the external device (200), a preset type of UI based on at least one of a sliding interaction direction and a direction opposite to the sliding interaction direction.

6. The user terminal apparatus (100) of claim 5, wherein the signals corresponding to the sliding interaction status are signals to move a currently displayed UI on the screen of the external device toward the sliding interaction direction, and provide a new UI associated with the currently displayed UI from the direction opposite to the sliding interaction direction.

7. The user terminal apparatus (100) of claim 5 or 6, wherein the signals corresponding to the sliding interaction status are signals to move, on the screen of the external device (200), the preset type of UI toward a direction corresponding to at least one of the sliding interaction direction and the direction opposite to the sliding interaction direction.

8. The user terminal apparatus (100) according to anyone of claims 1 to 7, wherein the signals corresponding to the sliding interaction status comprise at least one of signals to provide a preset type of UI, signals to convert UI pages, signals to move an object, signals to adjust a volume, signals to change a channel, signals to perform scrolling, and signals indicating a degree of progress on a progress bar displayed on the external device (200).

9. The user terminal apparatus (100) according to anyone of claims 1 to 8, wherein the layered panels comprise a first panel (430) and a second panel (440) arranged on the front surface of the first panel (430) so that the second panel (440) may slide toward at least one direction relative to the first panel (430), and
the controller (140) is configured to generate signals corresponding to the sliding interaction status based on a sliding direction of the second panel (440).

10. The user terminal apparatus (100) according to anyone of claims 1 to 9, further comprising:
a guide (521-1, 521-2) configured to guide the second panel (440), relative to the first panel (430), to circularly slide along a circular arc to opposite ends of the circular arc.

11. The user terminal apparatus (100) according to anyone of claims 1 to 10, wherein the controller (140) is configured to provide a wallpaper screen comprising at least one of a widget, an idle application and a customized content, in response to the user terminal apparatus (100) being in a standby mode.

12. The user terminal apparatus (100 of claim 11, wherein the controller (140) is configured to display an initial screen comprising a preset item in response to a preset event occurring in the standby mode, and in response to the preset item being selected, transmits signals to provide a screen corresponding to the selected preset item, together with signals to turn on the external device (200), to the external device (200).

13. The user terminal apparatus (100) according to anyone of claims 1 to 12, further comprising:
a support (450) protruded to hold the lower surface of the user terminal apparatus (100) toward at least one direction,
wherein the support (450) comprises a near field communication tag storing a software module associated with a remote controlling function, is separable from the user terminal apparatus (100), and is mounted on another user terminal apparatus (100) to automatically activate the remote controlling function of the another user terminal apparatus (100).

14. A control method of a user terminal apparatus (100), comprising:
receiving a sliding interaction through layered panels that can perform physical sliding;
generating a sliding interaction status based on the received sliding interaction; and
transmitting signals corresponding to the generated sliding interaction status to an external device (200),
wherein the transmitted signals corresponding to the sliding interaction status are control signals corresponding to one or more functions based on a context of the external device (200).

15. A display apparatus (200), comprising:
a communicator (210) configured to receive signals corresponding to a sliding interaction status from a user terminal comprising layered panels to perform physical sliding; and
a controller (230) configured to perform different one or more controlling functions corresponding to the received signals and a context of the display apparatus.
